Europäisches Patentamt

European Patent Office

Office européen des brevets

(11) Publication number: **0 183 951**
**B1**

(12) **EUROPEAN PATENT SPECIFICATION**

(45) Date of publication of patent specification: **13.06.90**

(51) Int. Cl.⁵: **G 06 K 11/06**

(21) Application number: **85113180.5**

(22) Date of filing: **05.10.82**

(60) Publication number of the earlier application in accordance with Art. 76 EPC: **0 083 395**

(54) **Apparatus for determining the coordinate location of a manually movable object on a surface.**

(30) Priority: **31.12.81 US 336461**

(43) Date of publication of application:
**11.06.86 Bulletin 86/24**

(45) Publication of the grant of the patent:
**13.06.90 Bulletin 90/24**

(84) Designated Contracting States:
**DE FR GB**

(56) References cited:
**GB-A-1 132 396**
**GB-A-1 575 420**
**US-A-4 294 543**

**IBM TECHNICAL DISCLOSURE BULLETIN, vol. 14, no. 10, March 1972, pages 3031-3032, New York, US; R.L. GARWIN: "Scanning-light spot for stylus input to a computer through a tablet"**

(73) Proprietor: **International Business Machines Corporation**
**Old Orchard Road**
**Armonk, N.Y. 10504 (US)**

(72) Inventor: **Garwin, Richard Lawrence**
**16, Ridgecrest East**
**Scarsdale New York 10583 (US)**
Inventor: **Levine, James Lewis**
**1474 Indiana Avenue**
**Yorktown Heights New York 10598 (US)**

(74) Representative: **Ahlman, Bertel**
**IBM Svenska AB Intellectual Property Department**
**S-163 92 Stockholm (SE)**

(56) References cited:
**MEASURES REGULATION AUTOMATISME, vol. 46, no. 10, October 1981, pages 51,53,55, Paris, FR; "Avec le miroir tournant, le barrage lumineux change de dimension..."**

**Electrical Design News, vol. 16, 15 th March 1971, no 6, page 52**

# EP 0 183 951 B1

**Description**

This invention relates to an apparatus for determining the co-ordinate location of a manually movable object on a surface.

The invention is particulary applicable to interfacing the movement of an indicator for manual input to data processing operations.

An interface of this type translates the location of a manually moved indicator into specific co-ordinates in an operating surface area. The operating surface area may be the two-dimension face place of a cathode ray tube or other type display.

Manually moved indicator to data processing interfaces have received some attention in the past in introducing manual movements into a data processing operaton and systems have been built using many physical phenomena for stylus detection. Among the more popular phenomena are acoustic, optical, force-sensing, capacitive and electrostatic. Each specific technology based on a particular phenomenon provides a different mixture of accuracy, human-factor considerations and cost to performance considerations.

The tracking of the location of a manually moved stylus by the use of a technology that is based on optical phenomena has many advantages.

The most promising technology from the standpoint of simplicity and precision involves the reflection of light from a moving beam scanner in a plane above an operating surface over which the manually positioned indicator or stylus is moved.

The present state of systems involving optical technology requires a moving member that provides an active role in the optics and thereby introduces a limitation on the moving members. Thus, US—A—3,898,445 describes the establishement of co-ordinates of a special stylus that emits a signal when a sweeping beam strikes it.

A 1971 National Aeronautics and Space Agency Technical Note describes the use of two beams located at separate points on a single line and employs reflection from a special stylus, that has a cylindrical mirror so that the retroreflected beam is confined within the scan beam and thereby permitting the shaft angle of the scan beam mounting to be usable in determining the position of the indicator member.

GB—A—1 575 420 discloses a position resolving apparatus which is provided with a light source and a beam splitter for generating two scanning beams.

The beams are reflected on retroreflecting means provided at the front of a screen and extending along the bottom edge and up the sides of the screen. However, each reflected light beam impinges on a respective photodetector, which adds to complexity and cost of the apparatus.

US—A—4 294 543 discloses an optical system for developing point coordinate information comprising two lasers for generating scanning light. It further comprises a rather complex sensor system with one continuous optical sensor (e.g. a plurality of interconnected solar cells), and two reference sensors.

IBM Technical Disclosure Bulletin illustrates a scanning-light spot for stylus input to a computer through a tablet. The device comprises a light source and a tablet is provided with retro-reflective spots at known location. Appearance of a signal at a detector or reflected light from a stylus at unknown location gives an input for calculation of said unknown location.

Electrical Design News, Vol. 16, 15th March 1971, No. 6, page 52 describes sampling of position data on a digitizer tablet.

The present invention is defined in the attached claims.

One embodiment of the present invention relates to a manual processing entry terminal comprising in combination an operating transparent surface essentially rectangular area having essentially two orthogonal dimensions, a source of essentially collimated light passing diagonally beneath said surface, a scanning mirror positioned in movable relationship at the diagonally opposite corner of area from said collimated light source and operable to cause a beam of light from said collimated light source to scan through a 90 degree angle, and first and second dihedral mirrors positioned with the spine of said mirror aligned with the edge of said surface, each dihedral mirror positioned on an opposite side of said operating area from said scanning mirror and first and second retroreflected light strips positioned on the remaining sides of said operating area.

According to another aspect of the invention interface apparatus for translating manual positioning into data in a data processing operation, comprises in combination sensing means for following both the position and the contact of a manually moved indicator member with respect to an operating area surface, memory means for serially storing a quantity of recent position locations, error screening means operable based on duration of contact of said manual indicator with said surface to eliminate contact bounce and to identify the end of a clear positioning movement, and data selection means based upon the last position of said manual indicator, said recent stored positions, and said positioning movement from said error screening means.

According to a further aspect the invention provides an improvement in a data processing interface for a manually positioned physical indicator member of the type wherein position information of said indicator member is derived from light that is absorbed or refracted by the indicator member, by which indicator member position coordinate determination is derived from angular information of a beam of scanning light produced by the interruption by said indicator member of a photodetected current.

2

How the invention can be carried into effect is hereinafter particularly described with reference to the accompanying drawings, in which:

Figure 1 is a simplified view of the optical system for use in one embodiment of the invention;

Figure 2 is a graph of photodetector current against time derived from the system of Fig. 1;

Figures 3A, 3B and 3C are a top and two side views of the optical system of another embodiment of the invention;

Figure 4 is a geometrical layout to illustrate the establishment of x-y co-ordinates for an indicator in the system of Figs. 3A, 3B and 3C;

Figure 5 is an illustration of a display with movement retention;

Figures 6, 7 and 8 illustrate the retention, display and erasure properties of an interface according to the invention;

Figures 9 and 10 are graphs illustrating the properties of retroreflective material;

Figure 11 is an exemplary detector and preamplifier circuit;

Figure 12 is an exemplary logic level conversion circuit.

Figures 13A, 13B and 13C are illustrations of analog and digital signal levels;

Figure 14 is an exemplary circuit for timing;

Figure 15 is a schematic of stylus contact with a surface;

Figure 16 is a flowchart of the data entry point selection procedure;

Figure 17 is a flow chart of the stylus-down phase;

Figure 18 is a flowchart of the first loss of contact phase;

Figure 19 is a flowchart of the stylus-up phase.

Figures 20, 21 and 22 are examples of the interaction of the entry point selection procedure with stylus contact variations; and

Figures 23 and 24 illustrate the optical system of a preferred embodiment of the invention.

The invention employs angular information acquired through the interruption of a photodetected current produced by a scanning light beam to determine position co-ordinates of a manually moved indicator or stylus and employs the history of position data to select precise position co-ordinates. The indicator member or stylus is free of reflectivity limitations, the properties of different portions of the indicator may be sensed for information transfer purposes and it may even be the finger of the operator.

For simplicity of explanation, the term stylus will be used for the indicator.

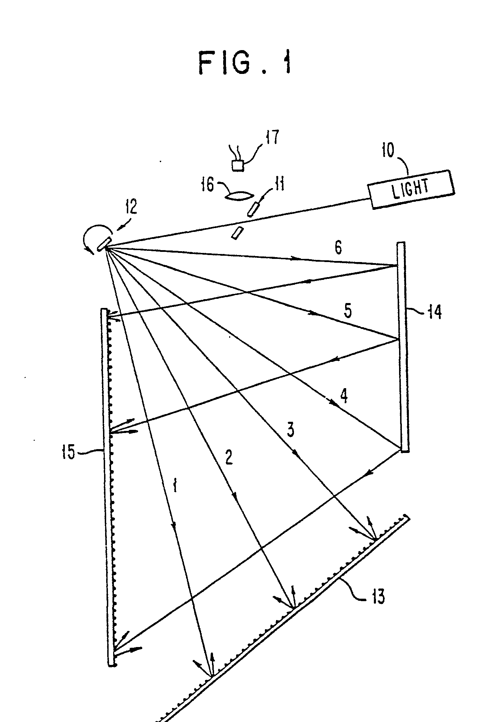

A light source 10 (Figure 1) provides a beam which enters an optical system through a small hole in a stationary mirror 11. The beam is of small diameter and relatively collimated. A laser serves as a very satisfactory light beam source. The beam is then swept across a reference surface in the plane of the figure by a rotating or vibrating mirror scanner 12. For a portion of the rotation, the beam crosses the reference surface as illustrated by rays 1, 2 and 3 to strike a retroreflective strip 13. The strip 13 may be made of beaded material similar to that used on the highway signs of high-gain projection screens, preferably having a more directional character. Such a material reflects back towards the source a large fraction of the incident light, the amount being relatively insensitive to the angle of incidence.

The reflected light is confined to a cone having a width of a few degrees centred on the reversed direction of the incoming rays 1, 2 and 3 as shown by the reflected multiple arrows. This light is reflected again by mirror 12 and stationary mirror 11 into a collecting lens 16 which provides a focus at photodetector 17.

During continuous scanning, there will be a steady photocurrent while the beam traverses the strip 13. As the scan continues, the beam strikes a stationary mirror 14 inclined to the strip 13 and is deflected across the reference surface from a new direction to strike a retroreflective strip 15 as indicated by rays 4, 5 and 6. The retroreflected light is again directed to photodetector 17 by mirrors 14, 12 and 11 and lens 16.

If a stylus, for example the finger of a user, is placed on the reference surface, the light beam is interrupted twice.

It has been discovered that by providing a light that is interrupted by the stylus, many limitations on stylus materials are removed and the properties of the stylus itself become available for information purposes. Even the finger of the user is satisfactory.

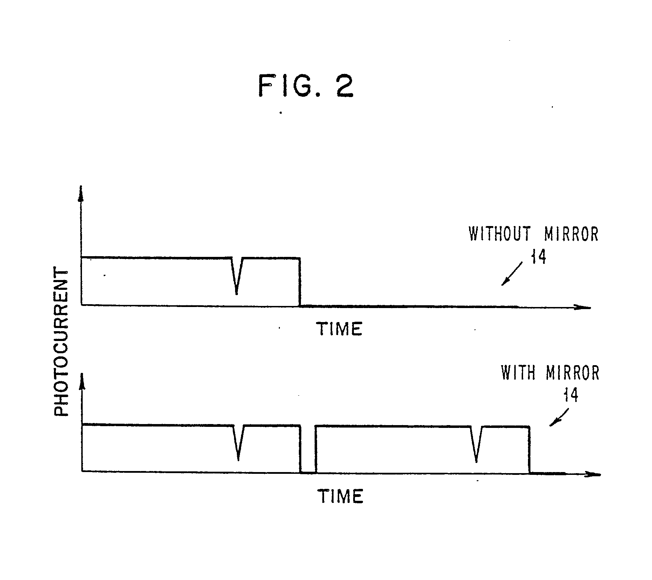

The scanning light beam provides a steady photocurrent. A stylus located anywhere in the area of the reference surface intercepts the beam for two ranges of scanning angle, producing dips in the photocurrent. The scanning angles at which the stylus is located are established by locating the centre of the dip relative to a suitable datum, for example a timing mark produced by the beam passing off the end of the strip 13 before encountering the end of mirror 14. Fig. 2 shows the photocurrent both with and without mirror 14.

Determination of the two angles of the scanning beam where the dips appear will then permit the location of the stylus, such as by the identification of x-y position co-ordinates of the stylus to be established by simple triangulation.

As the stylus is manually moved, certain psychomotor limitations are encountered and what the operator thinks is one position of the stylus may in fact be several. Accordingly, several co-ordinate positions may be established during a sequence of scans and a decision on which co-ordinates represent the most accurate data for the application involved is needed for accuracy. It has been discovered that a decision on the specific position co-ordinates when made employing the history of recent stylus position data provides improved accuracy.

The combination of being able to track and to specify precisely the location of an indicator member on an operating area provides a manual indicator to data processing input interface that permits a variety of applications, such as highly accurate input devices, displays, terminals and teleconferencing input stations.

The optical system of Figure 1 can be brought into a closer relationship with the boundaries of a working area by optically folding the beams under a reference surface in the operating area. This may be accomplished with 90 degree dihedral mirrors positioned along two orthogonal edges of the reference surface. A dihedral mirror is an L-shaped elongated reflecting member generally made up of two mirror strips intersecting on a line or spine at about a right angle.

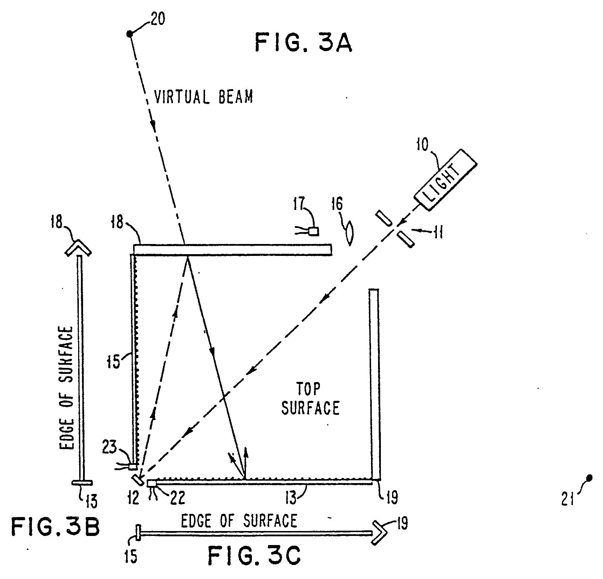

Such an optical system (Figures 3A, 3B and 3C) includes dihedral mirrors 18 and 19 which have their spines aligned with the refeence surface and serve to transfer a beam from below to above the reference surface, while acting in other respects as plane mirrors. The beam that passes beneath the reference surface is shown as a dotted line, whereas the beam that passes above the surface is shown as a solid line. The beam from source 10 through mirror 11 enters diagonally across and beneath the surface, strikes the scanner 12 which is a rotating or vibrating mirror, and is reflected, still beneath the surface, to the dihedral mirror 18. At the mirror 18, the beam is reflected from the lower facet to the upper facet and is reflected across, above and parallel to the reference surface to strike the retroreflector 13. The retroreflection as indicated by the multiple arrows providing a high steady light for the photodetector 17.

Rotation or vibration of mirror 12 causes the position at which the beam strikes the mirror 18 to move along the mirror to about the middle thereof, when the reflected beam strikes the corner of the retroreflector 13 and mirror 19. Continued rotation causes the beam reflected by the mirror 18 to be reflected also by the mirror 19 and to pass below the surface to the retroreflector 13. This continues until the beam passes off the mirror 18 across the gap and on to the mirror 19, when it is reflected by the mirror 19 to the mirror 18 and reflected below the surface to the retroreflector 15. About the middle of mirror 19, the beam is reflected directly to the corner of retroreflector 15 and mirror 18 and thereafter the beam moves across the surface of retroreflector 15.

This arrangement causes the signal beam from source 10 to behave optically as if it originated from two "virtual scanners" located at imaginary locations 20 and 21. When the beam strikes the mirror 18 first, the beam behaves as though originating from location 20. When the beam strikes the mirror 19 first, the beam behaves as though originating from location 21.

Timing to correlate scan with angular information of a line through the stylus an a line from the relevant virtual scanner location to the axis of the mirror 12 is provided as the beam strikes phototransistors 22 and 23, located at adjacent ends of retroreflectors 13 and 15.

For some scan angles, the beam, after reflecting from one dihedral mirror, will strike the other dihedral mirror rather than a retroreflective strip directly. This results in the beam being brought beneath the surface again. The retroreflective strips are extended so that they are both above and below the reference surface.

It should be noted that some care is required in arranging the mirrors and retroreflectors to ensure that the photocurrent is not interrupted during the transfer from above to below the reference surface.

With such a system, almost the entire area of the surface is usable, that is to say, a stylus placed almost anywhere on the surface is detectible by beam interruption.

Where the system is to be used in front of a cathode ray tube or other display, the reference surface can be made of transparent material. It should be noted, however, that because beams pass beneath the reference surface, some physical medium such as glass is preferred to serve as a stop to prevent the stylus from inadvertently being placed in a position that will block the lower beams.

The angular information is acquired as follows.

The beam is considered as two virtual scanner beams orginating at locations 20 and 21.

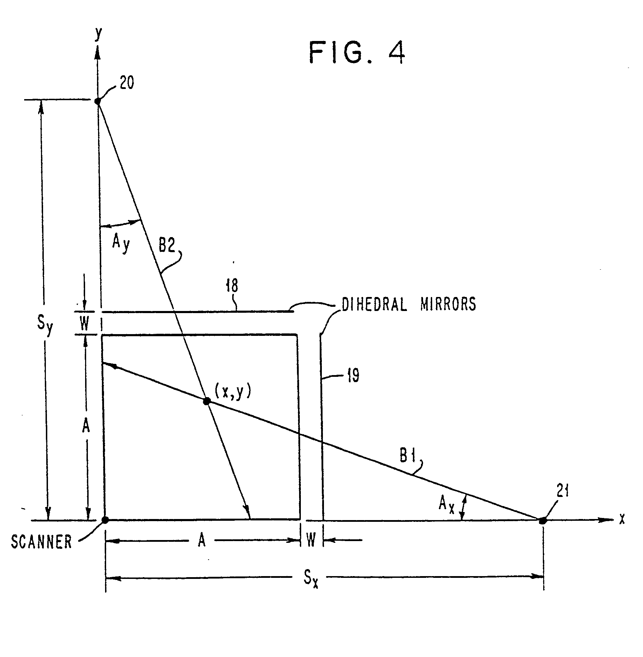

Considering that the angular information acquired is to be translated into x-y co-ordinates of the operating area, the geometrical triangulation to establish those x-y co-ordinates of the stylus in the operating area may be developed as shown in Figure 4. The stylus is assumed to be located at the intersection of two beams labelled $B_1$ and $B_2$. The co-ordinate axes are labelled x and y and the origin point is located at the point labelled scanner which is the intersection of the incoming beam and the scanning mirror facet.

The triangulation is as follows:

Let $A_x$ be the angle between $B_1$ and the x axis and let $A_y$ be the angle betweeen $B_2$ and the y axis. Let $S_x$ be the distance between the origin and the virtual scanner 21 located along the x axis, while $S_y$ is the distance to the scanner 20 located along the y axis. The x and y co-ordinates in accordance with the

invention are then expressed in terms of $S_x$, $S_y$ and the two angles $A_x$ and $A_y$ in accordance with equations 1 and 2.

$$\text{Equation 1} \quad X = \tan(A_y) \; \frac{S_y - S_x \tan(A_x)}{1 - \tan(A_x)\tan(A_y)}$$

$$\text{Equation 2} \quad Y = \tan(A_x) \; \frac{S_x - S_y \tan(A_y)}{1 - \tan(A_x)\tan(A_y)}$$

Normally, $S_x$ will be chosen equal to $S_y$.

The angles $A_x$ and $A_y$ may in turn be expressed in terms of the scanner angle which will be referred to as $A_s$. Assuming the scanner is rotating counterclockwise, and the beam is leaving the scanner along the x axis when $A_s = 0$. In accordance with the laws of reflection, the angles $A_x$ and $A_y$ are related to $A_s$ as set forth in equations 3 and 4.

$$\text{Equation 3} \quad A_x = 4A_s$$

$$\text{Equation 4} \quad A_y = \pi/2 - 4A_s$$

It will be clear to one skilled in the art that the triangulation procedure will fail if $B_1$ and $B_2$ were to approach being parallel. This could occur at the corner of a sufficiently large area diagonally opposite from the scanner, corresponding to $A_x = A_y = \pi/4$. Near this singular point, small measuring or computing errors become magnified so that the usuable area will have to be somewhat smaller than the actual available size.

As an illustration, assume that the working surface is a square of side A as shown in Figure 4. This leaves an unusable border of width $W = (S/2) - A$, where we assume $S_x = S_y = S$. Let the error in measuring angles $A_x$ and $A_y$ be of order $\delta A$, and let the resulting positional errors be $\delta Q$. Near the corner of the square, the errors would be expressed as shown in equation 5.

$$\text{Equation 5} \quad \delta Q = \left(\frac{S}{2}\right)\left(\frac{S}{2W}\right)\delta A$$

In order to assist one skilled in the art to practice the invention and achieve high resolution accuracy, the following description will be developed around some particular illustrative dimensions.

Assuming $S/2 = 355.6$ mm (14.0 inches) and $A = 304.88$ mm (12.0 inches). This leaves a border $W = 50.8$ mm (2.0 inches). Then the position errors will be about $2489.2\,\delta A$ mm radians ($98\,\delta A$ inch radians), with $\delta A$ in radians.

The optical system is subject to the following requirements. The light source must be small and collimated. A laser fills these requirements very well.

In the forward direction, a small diameter beam must scan across the tablet at a nearly constant height. The required precision for the 304.8 mm (12 inch) square area example is of the order of 1 minute of arc.

In the reverse direction, the system must collect as much of the retroreflected light as possible and deliver it to the photodetector, hence the numerical lens aperture for the lens 16 should be kept large. Aiming accuracy of the lens is of reduced importance as the return light is not well collimated.

The height of the various components should be minimized in order that the apparatus be convenient to use. This may produce some conflict with the large lens aperture but an acceptable compromise is possible.

Where the light source is a laser, the following example specifications should be of assistance. A 0.5 mw He-Ne laser provides more than enough power for the 304.8 × 304.8 mm (12 × 12 inch) working area and is completely eye-safe. It is equipped with a beam-expanding lens and a focusing lens chosen so as to minimize the beam diameter over the surface. A diode laser is more compact and less expensive, and would probably be used in a production device.

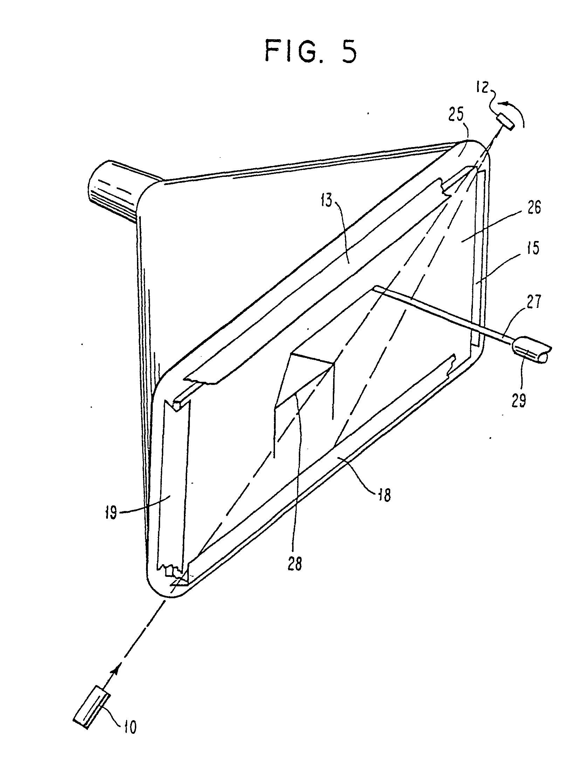

Referring to Figure 5, an illustration is provided of the optical system of Figures 3A, 3B and 3C mounted in connection with a display to provide indicator movement retention. This permits a display of the pattern that has been traced. The display may be mounted essentially coincident with the plane of the sanner so as to provide a terminal or it may in connection with a remote location for teleconferencing purposes.

The display member shown for illustration is a cathode ray tube 25 having positioned between the operator and the face thereof, the structure of Figures 3A, 3B and 3C. The surface 26 is a reference surface of an operating area. It is positioned so that light from a source can pass beneath the surface 26 to be reflected by the sanner 12. The light beam is then brought to the front of the surface 25 by dihedral mirror 18 or 19. The sanning beams strike retroreflector 13 or 15, except where interrupted by a stylus 27. The system employs standard techniques in the art such that lines formed by a series of x-y coordinates of the stylus tip drawn by the pencil example stylus 27 are retained as the picture 28 is traced and erasure is accomplished by having the system recognise the different refractive qualities of an eraser end 29 of the stylus, which is of greater diameter than the tip.

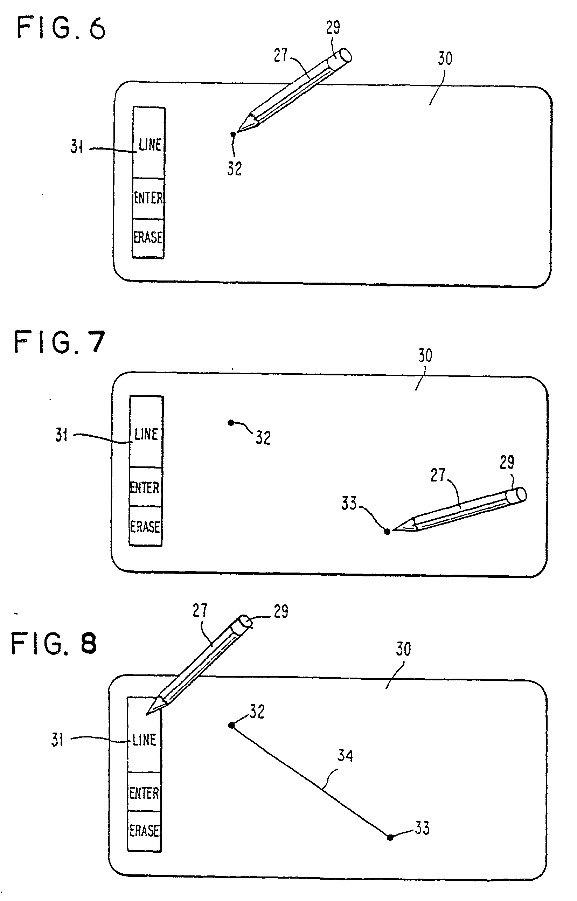

One example of the retention, display and erasure capabilities is illustrated in Figures 6, 7 and 8 which show a display screen 30 having a region 31 divided into sections labelled LINE, ENTER and ERASE. With the capability of the invention of determining the location of the stylus, specific portions of the operating area can be assigned to communicate with the system. Audio acknowledgement is usually provided. Such portions are called "soft keys" and the audio is a simple "beep". The soft key region is first touched and the system responds with a beep.

The system will identify and display the location of a point 2 at which a stylus touches and interrupts the beam. The soft key ENTER is touched by the stylus. The stylus 27 is then positioned to touch and identify a second point 33 (Figure 7), while the systems retains the display of point 32. The stylus is again positioned to touch the soft key ENTER. The system then retains and displays both points 32 and 33. The stylus is then positioned to touch the soft key LINE (Figure 8), so that the system displays and retains a line 34 between the points. If it became desirable to erase the line 34, movement of the stylus 27 to touch the soft key ERASE will remove the line.

The system, because it operates by interrupting a beam of light, will recognise the optical properties of a stylus such as the different reflectivity of the eraser portion 29 or a difference in size or diameter of parts of the stylus 27. Using the different optical property recognition capabilities, it is possible to achieve functions other than by using soft keys.

To recognise a difference in stylus cross-sectional size or material properties, it is desirable to use a laser beam having a diameter smaller than that of the intended stylus. This simplifies the signal detection circuitry, and can be accomplished by bringing the beam to a controlled focus near the centre of the surface area.

The behaviour of a laser beam in the vicinity of a focus has been thoroughly studied in the art. The following is a simplified discussion which is adequate for the purpose of practising the invention.

Assume that a laser beam of wavelength $\lambda$ is brought to a focus with waist $D_o$. The beam will diverge around the focus at a rate determined by a characteristic length $Z_o$ given by equation 6.

$$\text{Equation 6} \quad Z_o = \frac{\pi D_o^2}{4 \lambda}$$

At a distance Z from the focus (in either direction), the beam diameter D will be as set forth in equation 7.

$$\text{Equation 7} \quad D = D_o \sqrt{1+(Z/Z_o)^2}$$

It will be observed that equation 6 is an even function of Z, hence the best arrangement is to produce a focus at the centre of the operating surface area. The maximum diameter will then occur at the edges of the area. Let $Z=Z_e$ be the longest distance from the centre of the area to an adge. With $\lambda$ and Z fixed, the only free parameter in equation 6 is $D_o$. Minimising $D(Z=Z_e)$ with respect to $D_o$, we find the relationship expressed in equation 8.

$$\text{Equation 8} \quad D_o = \sqrt{\frac{4 Z_e}{\pi}}$$

With this choice, the maximum beam diameter (at $Z=Z_e$) will be $D_o\sqrt{2}$. In the present example 12 inch square area, the distance $Z_e$ is about 20 cm. We then find (for $\lambda = 6300A$) that $D_o$ should be 0.4 mm, leading to a maximum diameter of 0.6 mm at the edges. The laser and lenses must be located outside of the area, so that the distance to the focus after reflection from scanners and dihedral mirrors is about 1000 mm.

Thus, the problem reduces to forming a 0.4 mm waist at a distance of 1000 mm. A single lens would suffice if the laser divergence were 0.4 milliradians, mr. The divergence is approximately 0.8 mr, so that a beam-expander is required. This is made as follows. A lens of focal length $F_1$ brings the beam to a focus with waist diameter $D_1$ as expressed in equation 9.

$$\text{Equation 9} \quad D_1 = F_1 A_o$$

where $A_o$ is the 0.8 mr initial divergence.

A second lens of focal length F then forms a magnified waist at the desired 1000 mm distance. The final waist location L and diameter D are given as expressed by equations 10, 11 and 12.

$$\text{Equation 10} \quad L = F \; \frac{(L_1(L_1-F)+Z2_1)}{((L_1-F)^2+z^2_1)}$$

$$\text{Equation 11} \quad D = \sqrt{\frac{D_1 F}{((L_1-F)^2+z^2_1)}}$$

$$\text{Equation 12} \quad Z_1 = \frac{\pi D_1^2}{4\lambda}$$

Here, $L_1$ is the distance from the initial waist to the second lens and L the distance from that lens to the final waist. The parameter $Z_1$ represents the length scale for variations in beam diameter in the vicinity of the initial waist. This may be compared with equation 6.

A simple design procedure is to make an initial choice of F, the focal length of the second lens. Replace D in equations 11 and 12 with the desired waist diameter $D_o$ and L with the 1000 mm focusing distance. After some manipulation, one finds the required intermediate waist diameter $D_1$ to be as expressed in equation 13.

$$\text{Equation 13} \quad D_1 = \frac{FD_o}{\sqrt{((L-F)^2+(Z^2_o))}}$$

The focal length of the first lens may then be determined from equation 14.

$$\text{Equation 14} \quad F_1 = \frac{D_1}{A_o}$$

The spacing $L_1$ between this waist and the second lens is then obtained by equation 15.

$$\text{Equation 15} \quad L_1 = \frac{F(L(L-F)+(Z_o)^2)}{((L-F)^2+(Z_o)^2)}$$

The intermediate waist is formed a distance $F_1$ from the first lens, hence the inter-lens spacing is $F_1 + L_1$.

It should be noted that the above equations are only valid if the lenses do not truncate the laser beam.

Thus, the diameter of the first lens must exceed the input laser beam diameter. The required minimum diameter for the second lens D2 is easily calculated in accordance with equation 16.

$$\text{Equation 16} \qquad D_2 = D_1 \sqrt{(1+(L_1/Z_1{}^2)}$$

As an example, if F is chosen as 50 mm then $F_1$ will be 26 mm and the lenses will be spaced about 78 mm apart. The second lens diameter will have to exceed 2 mm.

These are some considerations that may be of assistance to the practise of the invention that are associated with the other components. The scanner is required to deflect the laser beam through a total angle of about 90 degrees. A polygonal mirror driven by a small motor at 60 Hz is satisfactory and is preferred because a 90° angular range is considered large for most available vibrating scanners. In principle, an eight-sided polygonal scanner could provide eight 90-degree scans per revolution. However, the mirror is required to collect the returning retroreflected light. Because the facets move as well as rotate, the poorly collimated return light would be progressively vignetted or faded near the ends of the scans, leading to large variations in photocurrrent. An improvement is achieved toward reducing this by using a 4-sided polygon, with oversized facets.

Returning to the embodiment of Figures 3A, 3B and 3C, the considerations involving the dihedral mirrors are as follows. The beam should leave the scanner parallel to the underside of the working area surface so that it will remain parallel after translation to the top surface. This will occur if the dihedral angle of the mirror is exactly 90 degrees. If the angle differs from 90 degrees by ε, then the output beam angle will be in error by 2ε. If both dihedral mirrors have the same but incorrect angle, then the error can be compensated by adjusting the incident laser beam angle, or by tilting the scanner.

The dihedral mirrors may be constructed of strips of front-surfaced mirror cemented into holders machined from rectangular metal stock. The machining may be done in such a way as to ensure that the two holders would be identical, although the angles may differ from 90 degrees by a few minutes of arc which is easily compensated. The holders and other parts of the system are mounted on a flat base plate cut, for example, from jig-plate metal stock.

The retroreflectors may be made by attaching self-adhesive material to metal strips.

Several types of retroreflective material are available in the art. All are essentially semi-microscopic glass beads bonded to a metallic coating on a paper backing. The beads may be exposed, or else protected by a polymer coating. Uncoated' retroreflective material has about 4 times the reflectivity of coating material, and works over a wider range of incident angles. However, it is susceptible to damage and is difficult to clean. With the system of the preferred embodiment, the signal-to-noise ratio is sufficiently large that it is possible to use protected or coating material without penalty.

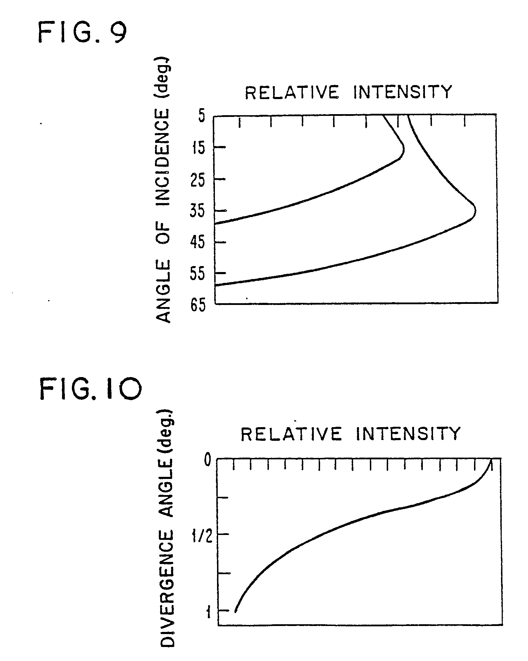

The variation in reflection efficiency of the retroreflective strips with angles of incidence and divergence is shown in Figures 9 and 10. There is rapid fall-off for angles of incidence beyond about 40 degrees.

Referring again to Figs. 3A, 3B and 3C, it will be appreciatd that the light reaching strips 13 and 15 may arrive at angles less than 45 degrees. Thus, for reflection efficiency, it is convenient to machine a number of small facets into the holders for strips 13 and 15, so as to tilt the retroreflective tapes in the correct direction.

Referring next to Figure 10, the angular distribution of the retroreflected light, with angles measured with respect to the incident beam is shown. Although the light is reasonably directional, the cone angle is much larger than the collection aperture. The aperture is rectangular. In the horizontal direction, the aperture will be truncated either by the scanner mirror or by the gap between the dihedral mirrors. An increase in the gap size will decrease the usable surface relative to the overall dimensions. In the vertical direction, the aperture is truncated by the surface on the one hand, and by either the base plate, the scanner or the dihedral mirrors on the other. Increasing any of the dimensions will make the apparatus dimensions thicker. For the illustrative example under discussion, a horizontal aperture of bout 1.2 degree is achieved, and a vertical aperture of about 1/4 degree, with an overal thickness of about 30.48 mm (1.2 inches). The system can use the least efficient but readily available coated retroreflective tape (3M—7922) made by the 3M Corporation, in order to collect about 0.02 percent of the initial laser power.

In the practise of the invention, the x-y co-ordinates of the stylus location are converted electronically to data processing compatible signals through the general functions of detection and preamplification, conversion to data processing logic signal levels, timing accommodation and conversion to digital numbers.

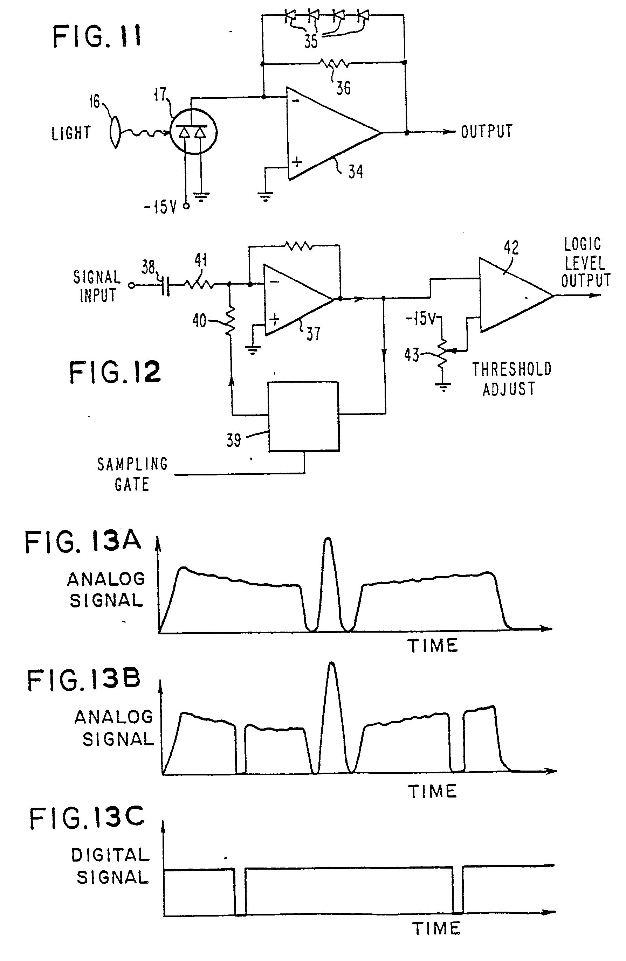

In the detection and preamplification functions, the following example specifications are employed. The duration of a complete scan is approximately 2 milliseconds (ms), with 1 ms devoted to each virtual scanning centre. During this time, a 0.3 mm diameter beam sweeps over a transverse distance of around 300 mm. The rise and fall times thus will be of order 2 micro-seconds. The photodetector and amplifier chain must therefore have moderately wide-band performance and reasonably low spectral noise densities. A satisfactory unit for these specifications is the EG&G model SD—100 photodiode, driving a low-noise one-chip operational amplifier connected in a current-feedback mode as illustrated in connection with Figure 11.

Referring to Figure 11, using the same reference numerals as Figures 3A, 3B and 3C for identical items, a small lens 16 collects the return light and focuses it onto the photodiode 17 connected between a negative voltage and ground. The photocurrent may be estimated as follows. It has been assumed that approximately 0.02 percent of the 0.5 mw laser power is returned to the detector. This is about 0.1 microwatt. The photodetector 17 has a sensitivity of about 0.2 amps/watt at the laser wavelength, hence there will be about 0.02 micro-amps of signal current to an amplifier 124. At the output of the amplifier 134, the voltage signal-to-noise ratio is in excess of 100:1, although this is lowered somewhat by the fine-grained structure arising from the beaded retroreflective strips 13 and 15. Proper shielding and grounding techniques are required to avoid corrupting the signal with logic-circuit switching noise. In some cases, it may be desirable to place an interference filter in front of the photodetector to eliminate noise from ambient lighting.

Referring again to Figures 3A, 3B and 3C, it will be noted that the beam will be sent directly back to the detector as the scan shifts from dihedral mirror 18 to dihedral mirror 19. The amplifier 134 would be driven into saturation, requiring a long recovery time. A diode limiter is therefore provided. Several diodes 35 are used in series across a large resistor 36 to provide a reasonably linear transfer function for signal currents in the normal range.

In the conversion to logic level signal function, the following considerations apply. A normal stylus is large enough to completely block the small diameter laser beam, resulting in nearly rectangular pulses with clean edges. The large signal-to-noise ratio allows the direct detection of the leading and trailing edges of each pulse without filtering. However, some efforts should be taken to eliminate direct current (DC) drifts.

Referring to Figure 12, an illustrative circuit is provided in which the preamplified signal is fed to amplifier 37 for additional gain. The input to amplifier 37 is through a capacitor 38 which blocks slow DC drifts arising from such items as photodetector leakage currents. A true zero is restored by sampling the output of amplifier 37 at a time when the scanning beam is known to be of the retroreflectors. The arrangement is similar to that used in conventional video cameras. Sampling is performed by a conventional sample-and-hold circuit 39 whose output is combined with the input to amplifier 37 with isolation by impedances 40 and 41, ensuring that zero output voltage corresponds to zero signal current. The output signal from amplifier 37 is fed to voltage comparator 42 whose output switches between logic-level 0 and logic-level 1 when a pulse is present. In the example circuit of Figure 12, the comparison level is set manually by potentiometer 43. However, it could be obtained automatically by sampling the return signal from retroreflector located just outside the active area.

Referring next to Figs. 13A, 13B and 13C, the signal levels are illustrated. Figure 13A shows the analog signal when a stylus is absent. The disturbance near the centre of the trace occurs when the beam scans across the gap between the dihedral mirrors. The overall variation in signal level results from vignetting of the return beam by the scanning mirror and by the effect of angle-of-incidence variations on the retroreflective strips. Figure 13B shows the analog signal with a stylus present. Figure 13C shows the digital output of the circuit of Figure 12 after being gated with a blanking signal.

There are certain timing functions to be maintained. Circuitry is provided to form digital numbers representing the occurrence times of the four edges, that is the leading and trailing edge of each pulse, and passed them to a computer for final analysis. Because the stylus position is obtained by triangulation, precision is required in measuring the angles. If cost were of no concern, a precision shaft encoder could be mounted on the motor. A less expensive alternative takes advantage of low cost of circuitry in combination with the large optical lever arm provided by the scanned laser beam.

Referring again to Figures 3A, 3B and 3C, two phototransistors 22 and 23 are mounted at the edges of retroreflector strips 13 and 15, respectively. The laser beam strikes phototransistor 22 just before it begins scanning retroreflector 13, and strikes phototransistor 23 just after it leaves retroreflector 15. These detectors 22 and 23 provide reference timing markers which have a fixed relationship to the geometry of the system. The large optical lever arm from the virtual sources allows the use of simple photodetectors and yet provides precise timing markers.

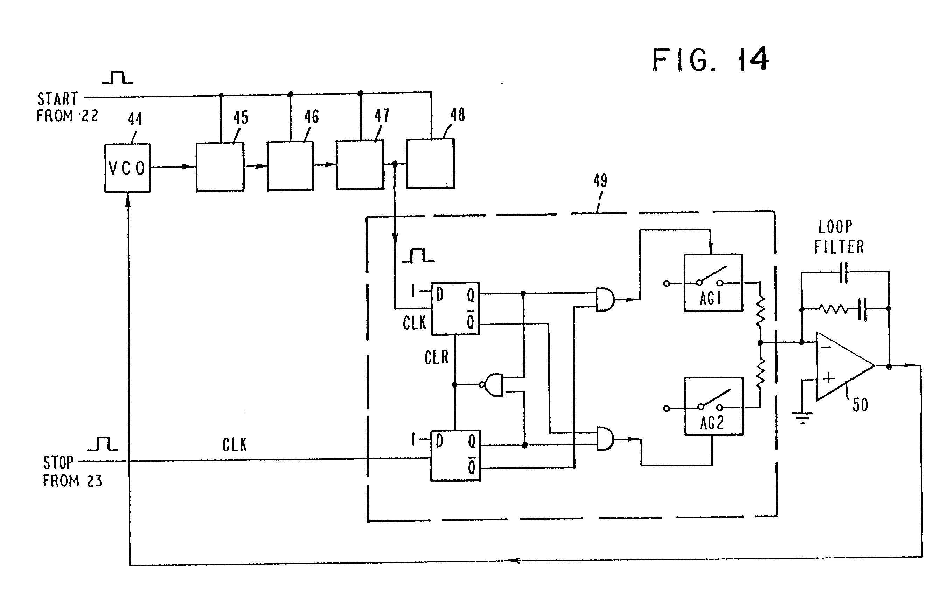

Referring to Figure 14, an example circuit is provided. A voltage controlled oscillator (VCO) 44 is synchronized so as to provide a fixed number of clock pulses between these markers, each pulse corresponding to a precise angular increment. The VCO 44 is started by the pulse from detector 22 and its output is counted by a 12-bit counter made up of 3 four-bit counters 45, 46 and 47 in series. The oscillator has a period of about 0.5 microseconds, which determines the final resolution of the measurements. The 12-bit counter generates a pulse after a count of 4096 is reached, whose time-of-occurrence is compared with that of the pulse from detector 23 by a standard digital phase detector circuit 49. If they differ, a correction voltage is applied to the VCO 44 through a holding circuit 50. The arrangement is similar to a phase-locked loop, except that the error is sampled and corrected only at discrete intervals. When the loop comes to equilibrium after a few scanner revolutions, there will be exactly 4096 pulses between the pulses from detector 22 and 23. Thus, the approximately 90 degree range of the scanner will be divided into 4096 equal increments. These increments are independent of the speed of the motor and the position of the mirror with respect to the drive shaft, and nearly independent of the alignment of the incoming laser beam. Further, the oscillator 44 need have only good short-term stability. The circuit of Figure 14 uses only inexpensive integrated circuits. The phototransistors 22 and 23 may be replaced by small vertical strips of retroreflective tape, arranged to introduce coded pulse patterns into the data stream from the main signal amplifier. These pulse patterns may be detected and used to drive the timing servo loop.

The final function is the conversion to digital numbers. A complete set of data consists of four digital numbers representing the leading and trailing edges of each pulse. These are obtained by storing the value of the 12-bit counter of Fig. 14 when the relevant edge occurs. The data values are then transferred for processing which calculates the centre of each pulse before performing the geometrical computations. Referring to the signal waveforms of Figure 13A and 13B, it is apparent that several blanking pulses are needed to limit detection to the relevant range of angles. In addition, gating signals are needed to activate the sample-and-hold gate 39 of Figure 12 for amplifier 37 and to initiate and terminate a 'data ready' signal.

These signals are obtained by decoding the binary counters. The 4-bit counter 48 is needed as some of the required pulses occur outside the measuring interval defined by the 12-bit counter. In addition, there is obtained a signal indicating successful stylus detection in which two and only two pulses are detected.

The resulting signal data is then processed in a suitable computer such as an IBM Series/1 minicomputer connected via a standard 16-bit input port. In order to further assist one skilled in the art example software instructions to execute the operations on the IBM Series 1 are contained in several subroutines. The x-y computations are provided by the following subroutines.

It will be apparent to one skilled in the art that the principles set forth in the subroutines may be called by other programs where the invention is part of a larger application.

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

```
          THIS SUBROUTINE FIRST CALLS READXY TO GET X AND Y VALUES

          MEASURED WITH RESPECT TO AN ORIGIN LOCATED AT THE LASER

          SCANNER.  IT THEN SHIFTS THE ORIGIN TO THE TABLET CO-

          ORDINATE SYSTEM, AND CHECKS TO SEE IF THE VALUE IS ON

          THE ACTIVE TABLET AREA OR ON THE AREA RESERVED FOR SOFT

          KEYS.  A RETURN CODE (RCODE) IS SET AS FOLLOWS :-


          -1: NO STYLUS +1: STYLUS ON SOFT KEY: O: STYLUS ON ACTIVE

          TABLET AREA.  IF A SOFT KEY, ITS VALUE IS RETURNED TO THE

          MAIN (NOT CALLING) PROGRAM IN THE VARIABLE KEY
```

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

```
     READXY     PROGRAM     START,MAIN=NO

                SUBROUT     READXY

                ENTRY       READXY

                EXTRN       GETXY,BEEP,ADDCODE,ADDCAL

                EXTRN       KEY,KEYNUM,X,Y,VX,VY,RCODE,ADDX,RETCODE

                EXTRN       XOFFSET,YOFFSET,VSCALE
```

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

```
     START      EQU *

                MOVE        KEY,O  O:NOT IN USE +N:SHAPE -N:COMMAND

                MOVE        RCODE,O  +1:SOFTKEY  O:PANEL  -1:NO
                            READING/OFF SCALE

                CALL        GETXY,ADDCODE,ADDCAL,ADDX

                IF          (RETCODE,EQ,O),GOTO,RD2

                MOVE        RCODE,-1

                GOTO        ENDRDPN

     RD2        USER        *+2  CALCULATE TRUE X AND Y IN FLOAT AND FIXED

                FMV         X,FRO

                FS          XOFFSET,FRO     SUBTRACT OFFSET FROM ORIGIN (X)

                FMV         FRO,X

                FMVC        FRO,XI

                FMV         Y,FRO

                FS          YOFFSET,FRO     SUBTRACT OFFSET FROM ORIGIN (Y)

                FMV         FRO,Y

                FMVC        FRO,YI

                BAL         RETURN,R1
```

```
***********************************************************************
        SEE IF ON ACTIVE TABLET AREA. IF NOT, CALL SORTER TO FIND IF ITS
    A SOFT KEY, AND IF SO, WHICH ONE
***********************************************************************


            IF              (X,LT,O,FLOAT),THEN
                SUB             XI,1
            ENDIF
            IF              (Y,LT,O,FLOAT),THEN
                SUB             YI,1
            ENDIF
            IF              (XI,GT,XMX),OR,(YI,GT,YMX),OR,
                            (XI,LT,O),OR,(YI,LT,O),THEN
                CALL SORTER
            ENDIF
ENDRDPN     EQU*
            IF              (RCODE,EQ,1),THEN
                CALL BEEP,HITONE
            ENDIF
    .
            RETURN
```

```
*****************************************************************
            SUBROUT    SORTER
            IF      (XI,EQ,-1),AND,(YI,GE,O),AND,(YE,LE,11),
                    GOTO,LTEDGE

            IF      (YI,EQ,11),AND,(XI,GE,O),AND,(XI,LE,10),
                    GOTO,TPEDGE
            MOVE    RCODE,-1
            GOTO    ENDSORT
 LTEDGE     MOVE    KEYNUM,YI
            ADD     KEYNUM,YI
            MOVE    #1,KEYNUM
            MOVE    RCODE,1
            GOTO    ENDSORT
 TPEDGE     MOVE    KEYNUM,24
            ADD     KEYNUM,XI
            ADD     KEYNUM,XI
            MOVE    #1,KEYNUM
            MOVE    KEY,(KEYTABL,#1)
            MOVE    RCODE,1
            GOTO    ENDSORT
 ENDSORT    EQU *
            RETURN
```

```
**************************************************************************
                        VARIABLES FOR THIS SUBROUTINE
**************************************************************************
          NREQ      DC    1F'3'

          NAV       DC    1F'3'

          FPDIV     DC    1E'3.0'

          XAV       DC    1E'0.0'

          YAV       DC    1E'0.0'

          XI        DC    1F'0'

          YI        DC    1F'0'

          XMX       DC    1F'10'

          YMX       DC    1F'10'

          KEYTABL   DC    X'FFFDFFFDFFFDFFFDFFF6FFF7FFF8FFF9FFFA'

                    DC    X'FFFBFFFCFFFE00013000500070009'

                    DC    X'000B00000000000000000000'

          ** 1:AMP  3:RES  5:CAP  7:GND  9:DOT  11:DIODE

          HITONE    DC    X'2000'

                    ENDPROG

                    END
```

```
*********************************************************************
        SUBROUTINE TO GET (X,Y) FROM TOUCH PANEL.  XY IS A DRIVER

        PROGRAM FOR THE PANEL HARDWARE.  IT IS CALLED TO GET THE

        RAW CALIBRATION CONSTANTS STORED IN THE PROGRAM WHICH

        CALLED THIS SUBROUTINE.  ADDCAL IS THE ADDRESS OF THESE

        CONSTANTS, WHICH CONSIST OF 4 DOUBLE-PRECISION FLOATING

        POINT NUMBERS FOLLOWED BY A SINGLE PRECISION FLOATING

        POINT NUMBER EQUAL TO TWICE THE TABLET SIDE.  THIS SUB-

        ROUTINE RETURNS X, Y A RETURN CODE AND THE RAW DATA T1 AND

        T2.

        ADDX IS ADDRESS OF X (WHICH MUST BE FOLLOWED BY Y) IN THE

        CALLING PROGRAM, BOTH SINGLE PRECISION FLOATING POINT

        NUMBERS FOLLOWED BY T1 AND T2, EACH SINGLE PRECISION

        INTEGERS

        THE CODE IS O FOR SUCCESS, -1 FOR NO FINGER

        THE CALCULATION IS GIVEN BY:

        X=S.TAN(A2)(1-TAN(A1)/(1-TAN(A1)TAN(A2)), SWAP 1,2 FOR Y

        A1=RR1(1)+T1,RR1(2), A2=RR2(1)+T2.RR2(2). T1,T2 ARE DETECTED

        PULSE CENTRE TIMES RELATIVE TO START PULSE.
*********************************************************************
        GETXY      PROGRAM    START,MAIN=NO,PARM=3

                   SUBROUT    GETXY,ADDCODE,ADDCAL,ADDX

                   ENTRY      GETXY

                   EXTRN      TAN

                   EXTRN      XY

        START      EQU *

                   CALL       AY,(RETCODE)   GET RAW DATA

                   IF         (RETCODE,NE,O),GOTO,ENDGET

        ***   START BY CONVERTING TIMES TO ANGLES USING CALIBRATION

              CONSTANTS

                   USER       *+2

                   MVW        ADDCAL,R3
```

15

```
        MVD       (R3,32),S   PICK UP S FROM CALLING PGM
        FMVC      T1,FRO
        FMD       (R3,8),FRO
        FAD       (R3),FRO    FRO=RR1(1)+RR1(2)*T1
        FMV       FRO,ANG1    THIS IS FIRST ANGLE
        FMVC      T2,FRO
        FMD       (R3,24),FRO
        FAD       (R3,16),FRO
        FMV       FRO,ANG2
        BAL       RETURN,R1
***   NOW CALCULATE TANGETS
        CALL      TAN,(ANG1),(TAN1)
        CALL      TAN,(ANG2),(TAN2)
        USER      *+2
        MVW       ADDX,R3
        FMV       TAN1,FR1    FR1=TAN1
        FMV       TAN2,FR2    FR2=TAN2
        FMV       FR1,FRO     FRO=TAN1
        FM        FR2,FRO     FRO=TAN1*TAN2
        FS        FP1,FRO     FRO=TAN1*TAN2 -1
        FMV       FR1,FR3     FR3=TAN1
        FS        FPI,FR3     FR3=TAN1 - 1
        FM        FR2,FR3     FR3=TAN2(TAN1 - 1)
        FD        FRO,FR3     FR3 = TAN2(TAN1 - 1)/
                                   (TAN1*TAN2-1)
        FM        S,FR3       FR3=X
        FMV       FR3,(R3)    STORE X IN CALLING PGM
        FMV       FR2,FR3     FR3=TAN2
        FS        FP1,FR3     FR3=TAN2-1
        FM        FR1,FR3     FR3=TAN1(TAN2-1)
        FD        FRO,FR3     FR3=TAN1(TAN2-1)/(TAN1TAN2-1)
        FM        S,FR3       FR3=Y
```

```
                    FMV       FR3,(R3,4) STORE Y IN CALLING PGM
                    BAL       RETURN,R1


        ENDGE1      EQU  *
                    USER      *+2
                    MVW       ADDCODE,R3
                    MVW       RETCODE,(R3)
                    MVW       T1,(R3,2)
                    MVW       T2,(R3,4)
                    BAL       RETURN,R1
                    RETURN
************************************************************************
        RETCODE     DC        1F'0'
        T1          DC        1F'0'
        T2          DC        1F'0'
        ANG1        DC        1E'0.0'
        ANG2        DC        1E'0.0'
        TAN1        DC        1E'0.0'
        TAN2        DC        1E'0.0'
        S           DC        1E'29.5'
        FP1         DC        1E'1.0'
                    ENDPROG
                    END
```

```
********************************************************************
         DRIVER SUBROUTINE TO READ RAW DATA FROM TOUCH PANEL SETS UP
         DIGITAL INPUT UNIT TO INTERRUPT ON HARDWARE LEVEL ZERO, WAITS
         FOR INTERFACE TO GENERATE INTERRUPT.  THEN READS DATA WORDS,
         PROPERLY INTO BINARY WORDS AND PASSES BACK DATA AND RETURN
         CODE TO CALLING PROGRAM ADDCODE IS ADDRESS OF RETURN CODE IN
         CALLING PGM, WHICH MUST BE FOLLOWED BY THE RAW DATA, ALL 2-BYTE
         INTEGERS
********************************************************************
         XY          PROGRAM START,MAIN=NO,PARM=1
                     SUBROUT XY,ADDCODE
                     ENTRY XY
         START       EQU *
                     USER *+2
                     MVWI 0,RETCODE
                     MVA  DBUFF,ADBUFF
                     MVWI 4,DBUFFCNI
                     MVA DOIT,INT   POINT TO FULL INTERRUPT HANDLER
                     BAL READIN,R6
         ***  WILL INVERT BITS TO GET TRUE DATA, TESTING BIT 15 FOR 1 ***
                     MVW1 4,R7
                     MVA DRUFF,R1
         INVLOOP     MVW (R1),R3
                     VR R3
                     TWI X'0001,R3
                     JN C3     JUMP IF THE BIT IS 1 (DATA VALID)
                     MVW1 -1,RETCODE
         C3          SRL 4,R3
                     MVW R3,(R1)+
                     JCT INVLOOP,R7
                     MVW DBUFF,XTIM
                     AW DBUFF +2,XTTM
                     MVW ADDCODE,R3
                     MVA RETCODE,R1
                     VMWI 6,R7
                     MVFN (R1),(R3)
                     BAL RETURN,R1
                     RETURN
```

```
****************************************************************

    READIN   EQU  *

             MVA  INT,X'F8'  STORE HANDLER ADDRESS IN INTERRUPT TABLE

             IO   DIRESET    RESET DI JUST IN CASE

             IO   DIPREP     PREPARE DI TO INTERRUPT ON LEVEL O

             MVWZ DIFCB,RO   MARK DI EVENT NOT READY

             IO   DIARM      ARM EXTERNAL SYNCH

             BAL  SVC,R7     WAIT FOR INTERRUPT

             DC   A(WAIT)

             DC   A(DIECB)

             B'   (R6)       RETURN TO CALLER

****************************************************************

*****    IMMEDIATE ACTION ROUTINE TO HANDLE INTERRUPT     *****

*****    THE SUPERVISOR WILL START THIS ROUTINE ON LEVEL O *****

*****    AFTER INTERRUPT, R1 POINTS TO 'INT', R7 HOLDS     *****

*****    DI DEVICE STATUS INFO, OTHER REGISTERS ARE CLEARED *****

*****    NOTE: THE ADDRESS OF THIS ROUTINE WAS STORED      *****

*****          ABOVE IN 'UNT'                              *****

****************************************************************

    DOIT     EQU  *

*****    READ 3 WORDS, THEN TEST FLAGS AND DISTRIBUTE      *****

             IO   DIREAD     READ D1 AND RESET SYNCH

             MVW  DIDATA,    STORE A WORD IN DBUFF
                  (R1,2)*

             AWI  2,(R1,2)   BUMP THE BUFFER POINTER

             SWI  1,(R1,4)   DECREMENT THE BUFFER COUNTER

             JNP  QUITIT     QUIT AFTER 4 READINGS

             LEX

    QUITIT   EQU  *

             DIS  1          DISABLE SUMMARY MASK (INHIBIT INTERRUPTS)

             ID   DIRESET

             EN   1          ENABLE SUMMARY MASK
```

```
              BAL   SVCT,R7   POST DI EVENT COMPLETE
              DC    A(POST)
              DC    A(DIECB)
              DC    X'FFFF'   POST CODE
              B     SUPEXIT   RETURN TO MAIN PROGRAM
*****     END OF IMMEDIATE ACTION ROUTINE                    *****
**********************************************************************
     ENDIT    EQU   *
              BAL   RETURN,R1  BACK TO EDX


**********************************************************************
***** DATA SECTION                                           *****
**********************************************************************
     DIPREP    DC   X'60640001'
     DIRESET   DC   X'6F640000'
     DIARM     DC   X'69640000'
     DIREAD    DC   X'0064'   HALF OF IDCB FOR DI
     DIDATA    DC   X'0000'   2ND HALF OF IDCB-DATA APPEARS HERE
***** KEEP THE NEXT 8 VARIABLES TOGETHER                     *****

     DIECB     ECB
     DCINT     DC   A(INT)
     INT       DC   A(DOIT)   ADDRESS OF DI INTERRUPT HANDLER
     ADBUFF    DC   A(DBUFF)  (R1,2)
     DBUFFCNT  DC   F'4'      (R1,4)
     DBUFF     DC   4F'0'     TEMPORARY BUFFER FOR DIDATA
     RETCODE   DC   1F'0'
     XTIM      DC   1F'0'
     YTIM      DC   1F'0'
**********************************************************************
*****     END OF DATA SECTION                                *****
**********************************************************************
```

```
*********************************************************************
      PROGRAM TO CALCULATE TANGENT.  SINGLE PREC.  FLOATING PT CALC
      ANGLE IN RADIANS STORED AT ANGADD IN MAIN CALLING PGM
      RESULT RETURNED AT RETADD IN CALLING PGM
*********************************************************************


      TAN        PROGRAM    START,MAIN=NO,PARM=2
                 SUBROUT    TAN,ANGADD,RETADD
                 ENTRY      TAN
      START      EQU  *
                 USER       *+2
      ***        FIRST TAKE ABSOLUTE VALUE OF ANGLE AND SAVE SIGN ***
                 FMV        ANGADD*,FRO
                 FMV        FRO,X
                 JN         NEG        JUMP IF ANGLE NEGATIVE
                 MVD        FPMIN,SIGN    AND STORE SIGN
                 J          CONT1
      NEG        MVD        FPMIN,SIGN    STORE SIGN
                 FMV        FRO,X
                 RBTWI      X'8000',X     RESET THE SIGN BIT
                 FMV        X,FRO
***** NEXT DIVIDE BY PI/4 AND SEPARATE INTO INTEGER AND FRACTION *****
      CONT1      EQU  *    FRO NOW HOLDS ABSOLUTE VALUE OF ANGLE
                 FD         PI4,FRO       DIVIDE BY PI OVER 4
                 FMVC       FRO,Q         STORE INTEGER PART
                 FMVC       Q,FR2         CONVERT BACK TO FLOATING POINT
                 FS         FR2,FRO       FRO CONTAINS FRACTIONAL PART
                                          (R)
**** NEED TO KNOW IF Q IS EVEN OR ODD--CHECK LAST BIT          *****
**** IF EVEN, W=R.  IF ODD, W=1-R  WILL LEAVE W IN FRO         *****
      TWI  X'0001',Q                      TEST BIT 15 in Q
                 JZ         EVEN          JUMP IF EVEN
```

```
             FMV      FP1,FR3         FR3=1
             FS       FRO,FR3         FR3=1-R
             FMV      FR3,FRO         STORE BACK IN FRO, CALL THIS W
     EVEN    EQU  *                   EVEN, LEAVE FRO ALONE
****         COMPUTE U=0.5W**2, LEAVE IN FR1                    *****
             FMV      FRO,FR1         WILL FORM U=0.5W**2
             FM       FRO,FR1
             FM       FPHF,FR1        FR2 HOLDS U
****         COMPUTE WP(U)=W(A+U),    LEAVE IN FR2
             FMV      FR1,FR2         FR2 HOLDS U ALSO
             FA       A,FR2           ADD A TO FORM PU
             FM       FRO,FR2         FR2 HOLDS W*PU
****         COMPUTE Q(U)=B+CU++DU**2, LEAVE IN FR3            *****
             FMV      FR1,FR3         FR3=U
             FM D,    FR3             FR3=DU
             FA       O,FR3           FR3=C+DU
             FM       FR1,FR3         FR3=CU+DU**2
             FA       B,FR3           FR3=B+CU+DU**2=QU(U)
****         NOW NEED Q MODULU 4                               *****
             MVW      Q,R5            PICK UP Q
             MVW      R5,R6           COPY INTO R6 ALSO
             SRL      2,R5            DIVIDE BY 4 (SHIFT RIGHT 2)
             SLL      2,R5            MULTIPLY BY 4 (SHIFT LIFT 2)
             SW       R5,R6           SUBTRACT FROM ORIGINAL
             MVW      R6,DO           STORE (O MOD 4)
             SLL      1,R6            DOUBLE Q
**** DIFFERENT ROUTINES FOR QO=O,1,2,3.  SELECT BY A BRANCH TABLE*****
**** O:TANX  1:COTX*  2:COTX  3:-TANX
             MVA      TABLE,R3
             AW       R6,R3
             B        (R3)*
     RTEO    FD       FR3,FR2         TAN=WP/Q
```

```
          FM       SIGN,FR2
          FMV      FR2,RES
          J        CONT2
RTE1      FD       FR2,FR3          COT=Q/WP
          FM       SIGN, FR3
          FMV      FR3,RES
          J        CONT2
RTE2      FD       FR2,FR3          COT=Q/WP
          FM       FPMIN,FR3        MULTIPLY BY -1
          FM       SIGN,FR3
          FMV      FR3,RES
RTE3      FD       FR3,FR2          TAN=WP/Q
          FM       FPMIN,FR2
          FM       SIGN,FR2
          FMV      FR2,RES
CONT2     EQU   *                   OK, ESCEPT FOR POSSIBLE SIGN
          MVW      RETADD,R3         ADDRESS TO RETURN RESULT
          MVD      RES,(R3)
          BAL      RETURN,R1
          RETURN
```

```
************************************************************************

      X     DC    1E'0.0'         ABSOLUTE VALUE OF ANGLE

      P14   DC    1E'0.7853981634' PI/4

      Q     DC    1E'0'           INTEGER PART OF ANGLE/P14

      R     DC    1E'0.0'         FRACTIONAL PART OF ABOVE

      QO    DC    1E'0'           Q MODULO 4

      W     DC    1E'0.0'         REDUCED ARGUMENT

      U     DC    1E'0.0'         0.5W**2

      FP1   DC    1E'1.0'

      FPHF  DC    1E'0.5'

      FPMIN DC    1E'-1.0'

      A     DC    1E'-8.460901'

      B     DC    1E'-10.772754'

      C     DC    1E.5.703366'

      D     DC    1E'-0.159321'

      PU    DC    1E'0.0'         A+U

      QU    DC    1E'0.0'         B+CU+DU**2

      RES   DC    1E'0'           TANGENT OF ANGLE

      SIGN  DC    1E'1.0'         SIGN OF ANGLE (1 OR -1)

      TABLE DC    A(RTEO)

            DC    A(RTE1)

            DC    A(RTE2)

            DC    A(RTE3)

            ENDPROG

            END


************************************************************************
```

24

These subroutines return the x and y co-ordinates of the stylus. The device of the invention is referred to in the program as the "tablet". The subroutines perform the following general functions:—

## 1 Data Acquisition

This routine is highly specific to the computer hardware and to the interface circuity. It causes the transfer of the four digital numbers representing the stylus pulse edges into main storage. The left and right edges of each pulse are then averaged to obtain an estimate of the pulse centre.

## 2 Angle Conversion

As discussed, the co-ordinates may be calculated in terms of two angles, $A_x$ and $A_y$. These angles are proportional to representative digital numbers, $N_x$ and $N_y$ representing the pulse centres so that the angles may be expressed as shown in equations 17 and 18.

$$\text{Equation 17} \quad A_x = C_1 + C_2 N_x$$

$$\text{Equation 18} \quad A_y = C_3 + C_4 N_y$$

The constants $C_1$—$C_4$ depend on the location of the phototransistors 22 and 23. They are obtained by a simple calibration procedure when the system is first assembled. The values are obtained as single-precision floating point numbers, stored and retrieved when the subroutine is first loaded into storage. Thereafter, the integers $N_x$ and $N_y$ are converted to floating point representation and $A_x$, $A_y$ obtained from equations 17 and 18 above as floating point numbers.

## 3 Stylus Co-ordinates

These are calculated using equations 3 and 4. The tangent functions are evaluated using a standard numerical approximation. All calculations are done using single-precision floating point arithmetic with 24-bit binary fractions. The value of S is obtained by direct measurement of the area dimensions.

In these subroutines, each routine has functional statements. The manual to data processing interface of the invention is referred to as the tablet. The regions of the operating surface that are set aside for communication functional purposes are called soft keys. If the stylus is detected in one of the soft key regions, it is recognised as not having a valid x-y co-ordinate. The program involves three subroutines called XY, GETXY, TAN and READXY and operate as follows:

XY reads raw data from the tablet. The numbers are basically the times at which the finger was detected relative to a timing mark. The program GETXY first converts these times into angles, and performs a trigonometric calculation to compute x-y co-ordinates. The subroutine TAN computes tangents for this calculation. The x-y co-ordinates so computed have their origin located at the scanning mirror, which is outside the actual tablet. These programs are completely specific to the particular example tablet under discussion, and would have to be entirely changed if some other device were used.

READXY then takes the X—Y values from GETXY and adjusts the values so that X=0, Y=0 correspond to the lower left-hand corner of the actual tablet. It then checks to see if the values are on the main part of the tablet or on the edges which correspond to "soft-keys".

The following subroutines illustrate the steps in providing retention, display and erase capabilities.

```
**********************************************************************
                SINGLE-FINGER OPERATION OF TABLET + DISPLAY
**********************************************************************


TAPIT     PROGRAM    START,20,DS=(TOUCHDAT,SHAPES)
          EXTRN      FIFOPU,FIFOPOP,DRAWLINE,MARKELINE,CONNECT
          EXTRN      FINGER,PLOTTER,GRIDI,READXY,SKETCH,PUTSHAPE
          ENTRY      X,Y,X1,X2,Y1,Y2,VX,VY,OLDVX,OLDVY
          ENTRY      XOFFSET,YOFFSET,VSCALE,VIDEO
          ENTRY      NDOTS,ADDCAL,ADDCODE,ADDX
          ENTRY      KEY,XFIFO,YFIFO,PENDING,TWIST,DS2,ROTATE
          ENTRY      RETCODE,RCODE,KEY,KEYNUM,TIMEDEL,NDEL
          ENTRY      WRITHRU,WRITHRU1,BEAMON,BEAMOFF,DODATA
          ENTRY      HITONE,LOTONE,VOLT4,VOLT6,DELAY1,PICKED
          ENTRY      DRAWING,CANCEL,ENTER,POLY,WRTCHNTRL,STOPPER
          ENTRY      HOLDER,LENGTH,NUMBER,LIMIT,POINT
          ENTRY      $SENSRIO,VSBUFF,VYBUFF,DSKPNT
*         IODEF      AO1,ADDRESS=63,POINT=O
*         IODEF      AO2,ADDRESS=63,POINT=1
*         IODEF      A16,ADDRESS=62,POINT=6
*         IODEF      A14.ADDRESS=62,POINT=4
                     ATTNLIST  ($SPF1,RUN,$PF5,QUIT)
RUN       IF (HOLDER,EQ,I),THEN
               MOVE    HOLDER,O
```

```
              POST    RUNEVNT
          ELSE
              MOVE    HOLDER,1
          ENDIF
          ENDATTN
QUIT      IF   (LOOPING,EQ,O),THEN
              GOTO    QUITIT
          ELSE
              MOVE    STOPPER,1
          ENDIF
          ENDATTN
START     EQU  *
          CALL    CLEARIT
          CALL    MSG
          READ    DS1,DISKBUFF,1,1,END=DERR,ERROR=DERR,WAIT=YES
          MOVE    RRI,DISKBUFF,(36,BYTE)
          GOTO    START1
DERR      ENQT    VIDEO
          PRINTEXT 'DISK ERROR OCCURRED',LINE=0,SPACES=O
          DEQT
          GOTO    QUITIT
START1    CALL    BLANKER
          WAIT    RUNEVNT,RESET
          MOVE    LOOPING,1
          ENQT    VIDEO
          PRINTEXT 'RUNNING',LINE=22,SPACES=73
          DEQT
AGAIN     EQU  *
          IF      (STOPPER,EQ,1),GOTO,QUITIT
          IF      (HOLDER,EQ,1),THEN
            MOVE    LOOPING,O
            ENQT    VIDEO
```

```
            PRINTEXT 'HOLDING',LINE=22,SPACES=73
         DEQT
         GOTO      START1
      ENDIF
      CALL      FINGER1
      CALL      BLANKER
      IF        (RCODE,EQ,O),THEN
        CALL    PLOTTER,1
        CALL    FIFOPUSH,(X),(Y),(XFIFO),YF1FO)
            ENDIF
      ELSE
            GOTO TESTKEY
      ENDIF
      IF        (PENDING,EQ,O),THEN
            GOTO AGAIN
      ELSE
            MOVE KEY,PENDING
      ENDIF
TESTKEY  ENQT      VIDEO
            PRINTEXT 'SOFTKEY NUMBER',LINE=3,SPACES=O
            PRINTNUM  KEY,LINE=3,SPACES=15
      DEQT
      IF    (KEY,EQ,LINE1),THEN
            CALL MAKELINE
      ENDIF
      IF    (KEY,EQ,LINE2),THEN
            CALL CONNECT
      ENDIF
      IF    (KEY,EQ,CANCEL),THEN
            MOVE PENDING,O
            MOVE ROTATE,1
      ENDIF
```

```
        IF    (KEY,EQ,DRAW),THEN
              MOVE DRAWING,O
              CALL SKETCH
        ENDIF
        IF    (KEY,EQ,DRAW1),THEN
              MOVE DRAWING,1
              CALL SKETCH
        ENDIF
        IF    (KEY,EQ,CLR),THEN
              MOVE NUMBER,O,(3,WORD)
        ENDIF
        IF    (KEY,GT,O),OR,(KEY,EQ,TWIST),THEN
              MOVE DSKPNT,KEY
              CALL PUTSHAPE
        ENDIF
        GOTO AGAIN
QUITIT  CALL CLEARIT
        PROGSTOP
```

```
**********************************************************************
        SUBROUT    BLANKER

        ENTRY      BLANKER

        MOVE       DODATA,BEAMOFF

        SBIO       DOI,BEAMOFF

        RETURN
**********************************************************************
        SUBROUT    MSG

        ENQT       VIDEO

        PRINTEXT   PFMSG,LINE=23,SPACES=O

        PRINTEXT   'HOLDING',LINE=22,SPACES=73

        DEQT

        RETURN
**********************************************************************
        SUBROUT    CLEARIT

        ENQT       VIDEO

        ERASE      1920,TYPE=ALL,MODE=SCREEN

        DEQT

        RETURN
**********************************************************************
        SUBROUT    BEEP,TONE

        ENTRY      BEEP

        USER *+2

        OW         TONE,DODATA    TURN ON BIT 02 OR BIT 03 (02=HITONE)

        IO         DOOUT

        RBTW       TONE,DODATA    TURN OFF BIT 02 OR 03 (03=LOTONE)

        IO         DOOUT

        BAL        RETURN,R1

        RETURN
```

```
**********************************************************************
VIDEO       IOCB  $SYSLOG,SCREEN=STATIC,TOPM=0,BOTM=23
PFMSG       TEXT  'PF1:RUN/HOLD        PF:END'
ADDCAL      DC    A(RR1)
ADDX        DC    A(X)
ADDCODE     DC    A(RETCODE)
**KEEP NEXT 10 TOGETHER**
RETCODE     DC    1F'0'
T1          DC    1F'0'
T2          DC    1F'0'
X           DC    1E'0.0'
Y           DC    1E'0.0'
KEY         DC    1F'-1'
KEYNUM      DC    1F'0'
RCODE       DC    1F'0'
VX          DC    1F'0'
VY          DC    1F'0'
**KEEP NEXT 3 TOGETHER**
RR1         DC    2L'0.0'
RR2         DC    2L'0.0'
S           DC    1E'29.5'
**KEEP NEXT 7 TOGETHER**
X1          DC    1E'0.0'
X2          DC    1E'0.0'
Y1          DC    1E'0.0'
Y2          DC    1E'0.0'
XOFFSET     DC    1E'2.0'
YOFFSET     DC    1E'1.0'
VSCALE      DC    1E'2909.1'
***********************
DISKBUFF    BUFFER    256,BYTES
VXBUFF      BUFFER    256,BYTES
VYBUFF      BUFFER    256,BYTES
```

31

```
OLDVX      DC    1F'0'

OLDVY      DC    1F'0'

VXX        DC    1F'0'

VYY        DC    1F'0'

STOPPER    DC    1F'0'

GRIDDER    DC    1F'0'

FRAMER     DC    1F'0'

LOOPING    DC    1F'0'

HOLDER     DC    1F'0'

XO         DC    1E'-0.1'

YO         DC    1E'-0.1'

INC        DC    1E'0.1'

*XLAST     DC    1E'0.0'

*YLAST     DC    1E'0.0'

NDOTS      DC    1F'100'

POLY       DC    1F'0'

FP1        DC    1E'1.0'

XINC       DC    1E'0.0'

YINC       DC    1E'0.0'

BEAMON     DC    X'8000'

BEAMOFF    DC    X'0000'

WRTTHRU    DC    X'40000'

WRTTRU1    DC    X'C000'

DOOUT      DC    X'4865'

DODATA     DC    X'0000'

TIMEDEL    DC    1F'0'

NDEL       DC    1F'5'

VOLT4      DC    1F'0'

VOLT5      DC    1F'0'

VOLT6      DC    1F'0'

VOLT7      DC    1F'0'

WRTCNTRL   DC    1F'1'      1 MEANS NORMAL WRITE
```

```
DELAY       DC    1F'1000'
DELAY1      DC    1F'400'
*LNGTH      DC    1E'0.0'
*1FLAG      DC    1F'0'
*DL         DC    1E'0.02'
PICKED      DC    1F'0'
PEN         DC    1F'0'
DOWN        DC    1F'1'
UP          DC    1F'0'
LOTONE      DC    X'1000'
HITONE      DC    X'2000'
XI          DC    1F'0'
YI          DC    1F'0'
NSHP        DC    1F'0'
XSHP        DC    1F'0'
YSHP        DC    1F'0'
ROTATE      DC    1F'1'
DRAWCTRL    DC    1F'0'         1 MEANS REQUITE PUSHBUTTON TO DRAW
DRAWING     DC    1F'1'         1 MEANS IN DRAWING MODE
DSKPNT      DC    1F'1'
CANCEL      DC    1F'-2'        CANCEL PREVIOUS FUNCTION
ENTER       DC    1F'-3'
TWIST       DC    1F'-4'        ROTATE +90
LINE1       DC    1F'-5'        LINES
LINE2       DC    1F'-6'        CONNECT ALL DOTS IN STACK
GRD         DC    1F'-7'        GRID
CLR         DC    1F'-8'        CLEAR STACK
DRAW        DC    1F'-9'        DODDLE
DRAW1       DC    1F'-10'       DRAW
ORGNX       DC    1F'0'
ORGNY       DC    1F'0'
SCALEX      DC    1F'1'
```

```
SCALEY      DC    1F'1'

XSHIFT      DC    1F'0'

YSHIFT      DC    1F'0'

SCALR       DC    1F'2700'

FLIPPER     DC    1F'0'

DUMP        DC    1F'1'

XFIFO       DC    16E'0.0'

YFIFO       DC    16E'0.0'

LENGTH      DC    1F'64'

LIMIT       DC    1F'60'

NUMBER      DC    1F'0'

POINT       DC    1F'0'

PENDING     DC    1F'0'

            ENDPROG

            END



CONNECT     PROGRAM   MAIN=NO

            SUBROUT   CONNECT

            ENTRY     CONNECT

            EXTRN     FIFOPOP,DRAWLINE

            EXTRN     NUMBER,X1,X2,Y1,Y2,PENDING,XFIFO,YFIFO

            IF        (NUMBER,GE,8), THEN

                CALL FIFOPOP,(X1),(Y1),(XFIFO),YFIFO)

                DO    UNTIL,(NUMBER,EQ,O)

                      CALL      FIFOPOP,(X2),(Y2),(XFIFO),(YFIFO)

                      CALL      DRAWLINE

                      MOVE      X1,X2,(1,FLOAT)

                      MOVE      Y1,Y2,(1,FLOAT)

                ENDDO

            ENDIF

            MOVE PENDING,O

            RETURN

            ENDPROG

            END
```

34

```
MAKELINE   PROGRAM   MAIN=NO
           SUBROUT   MAKELINE
           ENTRY     MAKELINE
           EXTRN     FIFOPOP,DRAWLINE,DELAY1
           IF        (NUMBER,LT,8),THEN
                MOVE PENDING,KEY
           ELSE
                CALL FIFOPOP,(X1),(Y1),(XFIFO),(YFIFO)
                CALL FIFOPOP,(X2),(Y2),(XFIFO),(YFIFO)
                CALL DRAWLINE
                STIMER DELAY1,WAIT
                ENDIF
                RETURN
                ENDPROG
                END
```

```
*****      DRAW A LINE FROM (X1,Y1), TO (X2,Y2)   *****
DRAWLINE   PROGRAM   MAIN=NO
           SUBROUT   DRAWLINE
           ENTRY     DRAWLINE
           ENTRY     DL
           EXTRN     ROUT,PLUTTER
           EXTRN     X,Y,X1,X2,Y1,Y2
           USER      *+2       FIRST COMPUTE LINE LENGTH
           FMV       X1,FRO
           FS        X2,FRO
           FM        FRO,FRO   DX**2
           FMV       Y1,FR1
           FS        Y2,FR1
           FM        FR1,FR1   DY**2
           FA        FRO,FR1
           FMV       FR1,LNGTH
           BAL       RETURN,R1
           CALL      ROOT,(LNGTH),(IFLAG)
           USER      *+2
           FMV       LNGTH,FRO NOW COMPUTE NUMBER OF SEGMENTS
           FD        DL,FRO    AND INGREMENTS
           FMVC      FRO,NDOTS NUMBER OF DOTS IN LINE
           FS        FP1,FRO   FRO=NDOTS-1=NSEGMENTS
           FMV       X2,FR1    FR1=X2
           FX        X1,FR1    FR1=X2-X1
           FD        FRO,FR1   FR1=(X2-1)/NSEGMENTS
           FMV       FR1,XINC  STORE X INCREMENT
           FMV       X1,FR2    FR2=X1
           FMV       FR2,X     STARTING X COORDINATE
           FMV       Y2,FR1    FR1=Y2-Y1
           FD        FRO,FR1   FR1=(Y2-Y1)/NSEGMENTS
           FMV       FR1,YINC  STORE Y INCREMENT
```

```
        FMV      Y1,FR2    FR2=Y1
        FMV      FR2,Y     STARTING Y COORDINATE
        BAL      RETURN,R1
        DO       NDOTS,TIMES
        CALL     PLUTTER,1
        USER     *+2
        FMV      X,FRO     FRO=X
        FA       XINC,FRO  FRO=X+XINC
        FMV      FRO,X     STORE INCREMENTED X VALUE
        FMV      Y,FR1     FR1=Y
        FA       YINC,FR1  FR1=Y+YINC
        FMV      FR1,Y     STORE INCREMENTED Y VALUE
        BAL      RETURN,R1
        ENDDO
        RETURN
XINC    DC       1E'0.0'
YINC    DC       1E'0.0'
FPI     DC       1E'1.0'
LNGTH   DC       1E'0.0'
IFLAG   DC       1F'0'
DL      DC       1E'0.02'
NDOTS   DC       1F'0'
        ENDPROG
        END
```

```
**** PUSH A FLOATING NUMBER ONTO A CIRCULAR FIFO STACK ****
FIFOPOP    PROGRAM   MAIN=NO
           SUBROUT   FIFOPOP,ADDX,ADDY,ADDXSTAK,ADDYSTAK
           ENTRY     FIFOPOP
           EXTRN     POINT,NUMBER,LENGTH,LIMIT
START      USER *+2
           MVW       NUMBER,R1       TEST FOR EMPTY STACK
           JZ        POPEXIT         QUIT IF EMPTY
           MVW       ADDXSTAK,R1     XSTACK ADDRESS
           AW        POINT,R1        POINTER TO DATA WORD
           MVD       (R1),ADDX*
           MVW       ADDYSTAK,R3
           AW        POINT,R3
           MVD       (R3),ADDY*
           SW1       4,NUMBER        REDUCE NUMBER BY 1
           AW1       4,POINT         RESET POINTER
           CW        LIMIT,POINT     CHECK FOR WRAP
           JNP       POPEXIT
           MVW1      0,POINT
POPEXIT    BAL       RETURN,R1
           RETURN
***************************************************************
           ENDPROG
           END
```

```
*****    PUSH A FLOATING NUMBER PAIR ONTO CIRCULAR FIFO STACKS ****

*****    CALL FIFOPUSH,(X),(Y),(XSTACK),YSTACK)

FIFOPUSH  PROGRAM   MAIN=NO

          SUBROUT   FIFOPUSH,ADDX,ADDY,ADDXSTAK,ADDYSTAK

          ENTRY     FIFOPUSH

          EXTRN     POINT,NUMBER,LENGTH,LIMIT

START     USER      *+2

          CW        LENGTH,NUMBER   CHECK FOR FULL STACK

          JNN       PUSHEXIT        DON'T PUSH IF STACK FULL

          MVW       POINT,R1        LOCATION OF FIRST WORD (IN BYTES)

          AW        NUMBER,R1       NUMBER OF BYTES IN STACK

          CW        LIMIT,R1        CHECK FOR WRAPARAOUND

          JNP       NDWRAP

          SW        LENGTH,R1

NOWRAP    MVW       R1,R3

          AW        ADDXSTAK,R1     POINT TO STACK ADDRESS

          MVD       ADDX*,(R1)

          AW        ADDYSTAK,R3

          MVD       ADDY*,(R3)

          AW1       4,NUMBER        BUMP NUMBER

PUSHEXIT  BAL       RETURN,R1

          RETURN

***************************************************************************

          ENDPROG

          END
```

```
SKETCH      PROGRAM    MAIN=NO
            SUBROUT    SKETCH
            ENTRY      SKETCH
            EXTRN      READXY,PLUTTER,&SENSRIU
            EXTRN      HOLDER,STOPPER,RCODE,DRAWING,KEY,CANCEL
            IODEF      A16,ADDRESS=62,POINT=6
START       CALL       READXY
            IF         (HOLDER,EQ,1),OR,(STOPPER,EQ,1),THEN
            RETURN
            ENDIF
            IF         (RCODE,EQ,O),THEN
            IF         (DRAWING,EQ,O),THEN
            CALL       PLOTTER,1
            GOTO       START
            ELSE
            SBIO       A16,VDLT6
            IF         (VDLT6,GT,10000),THEN
            CALL PLOTTER,1
            GOTO       START
            ELSE
            CALL       PLOTTER,0
            GOTO       START
            ENDIF
            ENDIF
            ENDIF
            IF         (KEY,EQ,CANCEL),THEN
            RETURN
            ELSE
            GOTO START
            ENDIF
*******************************************************************
VDLT6       DC         1F'0'
            ENDPROG
            END
```

```
*********************************************************************

***PLOT AN X,Y POINT ON A TEKTRONIX 611 SCOPE. X,Y FLOATING PT ***
***IF MODE IS O, PLOTS IN WRITE-THROUGH MODE
*********************************************************************
PLOTTER     PROGRAM    MAIN=NO
            SUBROUT    PLOTTER,MODE
            ENTRY      PLOTTER
            EXTRN      $AWNAE10,BEAMON,BEAMOFF,DODATA
            EXTRN      X,Y,VX,VY,VSCALE,TIMEDEL,WRTTHRU,WRTTHRU1
            IDDEF      AD1,ADDRESS=63,POINT=0
            IDDEF      AD2,ADDRESS=63,POINT=1
            IDDEF      DO1,TYPE=GROUP,ADDRESS=65
START       EQU   *
            USER       *+2        SCALE X AND Y TO DRIVE A/D CONVERTORS
            FMV        X,FRO
            FM         VSCALE,FRO    SCALING FOR TEKTRONIX 611 SCOPE
            FMVC       FRO,VY
            BAL        RETURN,R1
            SBIU       AD1,VX
            SBIU       AD2,VY
            IF         (MDDE,EQ,O),GOTO,NOWRT)
            SBIU       DO1,BEAMOFF
            GOTO       ENDPLT
NOWRT       EQU   *
            SBIU       DO1,WRTTHRO
            SBIO       DO1,WRTTHRU1
            MOVE       DODATA,WRTTHRU1
ENDPLT      RETURN
*********************************************************************

            ENDPROG
            END
```

```
          *****PROGRAM TO COMPUTE SQUARE ROOTS, USING METHOD DESCRIBED
IN*****

*****PUBLICATION 360S-LM-501 (IBM SYSTEM/360 FOR TRANIV LIBRARY)****

*****JAMES L LEVINE 11/16/79. TO USE CALL ROOT,(X),(1FLAG)      *****

*****VARIABLES IN MAIN:  X DC E'O'O', 1FLAG DC F'O'             *****

*****NOTE: ROOT APPEARS IN VARIABLE IN WHICH ARGUMENT WAS STORED****

*****IF INPUT IS NEGATIVE, ETS 1FLAG=-1 IN MAIN AND COMPUTES ROOT***

*****OF ABSOLUTE VALUE, OTHERWISE, 1FLAG SET TO O. CODE IS REUSABLE*

ROOT      PROGRAM START, PARM=1,MAIN=NO

          SUBROOT      ROOT,ADDX,ADDI

          ENTRY        ROOT

START     USER  *+2

*****WANT TO LIMIT MANTISAA TO RANGE 1/16/--1                   *****

*****FIRST DEAL WITH EXPONENT. WANT TO DIVIDE IT IN HALF, AND   *****

*****NOTE IF WAS ODD. IF SO, FINAL RESULT MUST BE MULTIPLIED BY 4***

          MVW   ADDI,R1   POINT TO 1FLAG IN CALLER

          MVWI  O,(R1)    INITIALIZE TO O

          MVW   ADDX,RO   RO POINTS TO DATA IN CALLING PGM

          TBTR  (RO,O)    CLEAR BIT I IF ON (ABSOLUTE VALUE OF X)

          JZ    CONT      JUMP IF X WAS POSITIVE

          MVWI  -1,(R1)   SET IMAGINARY FLAG IF X NEGATIVE

CONT      MVB   (RO),TEMP+1 PICK UP EXPONENT

          MVD   TEMP,R3   STORE IN REGISTER PAIR R3-R4

          SW1   64,R3     REMOVE OFFSET

          SRLD  1,R3      DIVIDE BY TWO, LOW ORDER BIT TO R4

          AW1   64,R3     REPLACE OFFSET

*****R3 CONTAINS NEW EXPONENT, R4 IS NON-ZERO IF ORIGINAL WAS ODD***

*****DON'T TAMPER WITH R3,R4                                    *****
```

```
*****NOW MUST GET SQUARE ROOT OF MANTISSA                          *****
          MVB   B40,(RO)  MAKES NUMBER LOOK AS IF IN RANGE 1/16--1
*****COMPUTE INITIAL APPROXIMATION Y1 = A + B/(c + X)              *****
          FMV   (RO),FRO  FRO=X
          FMV   FO,FR3
          FC    FRO,FR3   COMPARE WITH O
          JZ    DONE      QUIT NOW IF O
          FA    C,FRO     FRO = C + X
          FMV   B,FR1     FR1 = B
          FD    FRO,FR1   FR1 = B/(C + X)
          FA    A,FR1     FR1 = YN
*****NOW REFINE BY TWO PASSES OF NEWTON-RAPHSON ITERATION          *****
          MVW1  2,R7
LOOP      FMV   (RO),FRO  FRO = X
          FD    FR1,FRO   FRO = X/YN
          FA    FRO,FR1   FR1 CONTAINS YN + 1/YN
          FM    FHALF,FR1 FR1 = YN+1
          JCT   LOOP,R7
          FMV   FR1,(RO)  PLACE RESULT BACK IN X
          MVB   R3,(RO)   INSERT NEW EXPONENT
          CWI   6,R4      SEE IF ORIGINAL EXPONENT WAS ODD
          JZ    DONE      FINISHED IF EVEN
          FMV   (RO),FRO  ELSE MUST
          FM    F4,FRO    MULTIPLY BY 4
          FMV   FRO,(RO)  AND STORE IT
DONE      EQU   *
          BAL   RETURN,R1
          RETURN
TEMP      DC    2F'0'
FO        DC    E'0.0'
F4        DC    E'4.0'
FHALF     DC    E'0.5'
A         DC    E.'1.681595'
B         DC    E.'1.288973'
C         DC    E'0.8408065'
B40       DC    X'4040'
          ENDPROG
          END
```

```
*********************************************************************
PUTSHAPE   PROGRAM    MAIN=NO

           SUBROUT    PUTSHAPE

           ENTRY      PUTSHAPE

           EXTRN      FIFOPOP,NUMBER,$SENSRIO,VIDEO

           EXTRN      ROTATE,DS2,VXBUFF,VYBUFF,DSKPNT,FSCALE

           EXTRN      PENDING,KEY,CANCEL,XFIFO,YFIFO,TWIST

           EXTRN      NDEL,TIMEDEL,BEAMON,BEAMOFF,WRTTHRU,DODATA

           IODEF      AO1,ADDRESS=63,POINT=O

           IODEF      AO2,ADDRESS=63,POINT=1

           IODEF      DO1,TYPE=GROUP,ADDRESS=65

           IF         (KEY,EQ,TWIST),THEN

           ADD        ROTATE,1

           IF         (ROTATE,GT,4),THEN

           MOVE       ROTATE,1

           ENDIF

           STIMER     DELAY2,WAIT

           RETURN

           ENDIF

           IF         (NUMBER,EQ,O),THEN

           MOVE       PENDING,KEY

           RETURN

           ENDIF

           READ       DS2,VXBUFF,1,DSKPNT,END=DERR,ERROR=DERR

           ADD        DSKPNT,1

           READ       DS2,VYBUFF,1,DSKPNT,END=DERR,ERROR=DERR

           SUB        DSKPNT,1

           CALL       FIFOPOP,(X),(Y),(XFIFO),(YFIFO)

           FMULT      X,VSCALE

           FPCONV     XSHP,X,PREC=SF

           FMULT      Y,VSCALE

           FPCONV     YSHP,Y,PREC=SF
```

44

```
              MOVE      NSHP,VXBUFF FIRST WORD OF BUFFER IS NUMBER OF PTS
              MOVE      #1,2
              DO        NSHP,TIMES
              GOTO      (NOPLT,ROTO,ROT90,ROT180,ROT270),ROTATE
    ROTO      ADD       (VXBUFF,#1),XSHP,RESULT=VXX
              ADD       (VYBUFF,#1),YSHP,RESULT=VYY
              GOTO      PLTIT
    ROT90     SUB       XSHP,(VYBUFF,#1),RESULT=VXX
              ADD       (VXBUFF,#1),YSHP,RESULT=VYY
              GOTO      PLTIT
    ROT180    SUB       XSHP,(VXBUFF,#1),RESULT=VXX
              SUB       YSHP,(VYBUFF,#1),RESULT=VYY
              GOTO      PLTIT
    ROT270   .ADD       XSHP,(VYBUFF,#1),RESULT=VXX
              SUB       YSHP,(VXBUFF,#1),RESULT=VYY
    PLTIT     SB10      AD1,VXX
              SB10      AO2,VYY
              DO        NDEL,TIMES
              ADD       TIMEDEL,0
              ENDDO
              SB10      DO1,BEAMON
              ADD       #1,2
              SB10      DO1,BEAMOFF

              MOVE      DODATA,BEAMOFF
              ENDDO
              SUB10     DO1,WRTTHRU
              SUB10     DO1,BEAMOFF
              MOVE      DODATA,BEAMOFF
              MOVE      ROTATE,1
              MOVE      PENDING,0
    NOPLT     RETURN
```

45

```
DERR        ENQT        VIDEO
            PRINTEXT    'DISK ERROR OCCURRED',LINE=0,SPACES=0
            DEQT
            RETURN
*********************************************************************
X           DC          1E'0.0'
Y           DC          1E'0.0'
NSHP        DC      ·   1F'0'
XSHP        DC          1F'0'
YSHP        DC          1F'0'
VXX         DC          1F'0'
VYY         DC          1F'0'
DELAY2      DC          1F'400'
            ENDPROG
            END
```

```
*****   WRITES A GRID ON THE SCREEN.   CALL GRID
GRIDI       PROGRAM    START,MAIN=NO
            SUBROOT    GRIDI
            ENTRY      GRIDI
            EXTRN      DRAWLINE,XI,X2,Y1,Y2,DL
START       MOVE       DLDDL,DL,'(1,FLOAT)
            MOVE       DL,DLTEMP,(!,FLOAT)
            MOVE       X1,0,(1,FLOAT)
            MOVE       X2,11,(1,FLOAT)
            MOVE       Y1,0,(2,FLOAT)
            DO         12,TIMES
            CALL       DRAWLINE
            FADD       Y1,1
            FADD       Y2,1
            ENDDO
            MOVE       X1,0,(",FLOAT)
            MOVE       Y1,0,(1,FLOAT)
            MOVE       Y2,11,(1,FLOAT)
            DO         12, TIMES
            CALL       DRAWLINE
            FADD       X1,1
            FADD       X2,1
            ENDDO
            MOVE       DL,OLDDL,(1,FLOAT)
            RETURN
DLDDL       DC         1E'0.02'
DLTEMP      DC         1E'0.11'
            ENDPROG
            END
```

The example system under discussion exhibits an accuracy of about 0.254 mm (0.01 inches) when used with styli of various diameters and tip-shapes. These include pencils, the index fingers of the user, 6.35 mm (0.25 inch) diameter discs, etc. A typical user is able to select a point with about 1.27 mm (0.05 inch) accuracy using their fingers, despite being unable to see the actual point of contact once the finger is close to the surface. This indicates the ability of the device to find the centre of the large-diameter finger with precision. Greater resolution is achieved where the system, as shown in Figure 5, is positioned in the optical path between a user and a display so that immediate visual feedback is provided.

If a stylus with a small tip is used, points can be entered without visual feedback to an accuracy of about 0.254 mm (0.01 inches). The stylus should be held perpendicular to the surface. Alternatively, a round optical comparator with a simple cross-hair can be placed on the surface for use in entering points.

The invention provides some 'human factors' considerations. The optical system senses the stylus position a small distance above the surface. As a result, it is moderately sensitive to the tilt of the stylus.

This can lead to reduced accuracy if the system is operated without immediate visual feedback via a display of already entered data. When such feedback is presented, a user can easily make very precise adjustments by rocking a finger or other stylus slightly in the desired direction.

The manner of detection of the invention will sense all objects on the surface and as a result, the hand cannot be rested on the surface while operating. Any drafting aids, such as rulers or curves, have to be arranged to adhere to the surface as they cannot be held by the other hand. It is also possible to detect the orientation of a specially shaped stylus, or of two fingers placed on the operating area surface. Such information can be used in various ways, for example, to input directional as well as positional information. As discussed, the system can also recognise the wider or eraser end of a pencil-like stylus, thereby permitting the thick end or eraser to be used for deletion.

The system, once the capabilities thus far described are available, is further adaptable to improve operator-data processor interactive activity. Designs can be facilitated through the use of software-defined areas on the surface that can be touched by the stylus to direct the system to perform specific functions. Useful feedback can be provided by auditory indication, such as a "beep" device. The function direction regions of the operating area have been given the name soft keys. As previously described as an example of such use, consider entering the end points of a line. A soft key labelled 'LINE' is first touched. The system responds with an audible 'beep' to indicate key detection. The first end-point is touched, and is displayed immediately on a screen in a tracking mode. After the finger is lifted, the point remains displayed until a key labelled 'ENTER' is touched, the system again providing a beep. The second point is similarly entered, and the system responds by drawing the line.

Points can also be entered via a push button activated by the other hand.

In order to facilitate the achieving of the high accuracy capability of the invention, as the principles of the invention are translated into different apparatus, the following analysis of some typical sources of error is advanced.

One source of error is in the provision of the co-ordinates. A measure of the accuracy can be appreciated from the following discussion. For the example square area of side S/2, in which $S_x = S_y = S$, the equations 1 and 2 can be expressed as the following equations 19 and 20.

$$\text{Equation 19} \qquad X = \frac{S \tan (A_y) \, (1 - \tan (A_x))}{(1 - \tan (A_x) \, \tan (A_y))}$$

$$\text{Equation 20} \qquad Y = \frac{S \tan (A_x) \, (1 - \tan (A_y))}{(1 - \tan (A_x) \, \tan (A_y))}$$

The major source of error is the measurement of the angles $A_x$ and $A_y$, provided that equations 19 and 20 are evaluated with sufficient numerical precision. The errors in x and y may be estimated by differentiating equations 19 and 20 with respect to the angles. Assuming $\delta A$ to be the magnitude of the angular errors, and $\delta X$ and $\delta Y$ to be the resulting co-ordinate errors. Then

$$\text{Eq. 21} \quad X = S \, \delta A \, \frac{\left| \tan (A_y) \, (1 - \tan (A_y)) \right| \cos^{-2}(A_x) \, + \, \left| 1 - \tan (A_x) \right| \cos^{-2}(A_y)}{[1 - \tan (A_x) \, \tan (A_y)]^2}$$

$$\text{Eq. 22} \quad Y = S \, \delta A \, \frac{\left| \tan (A_x) \, (1 - \tan (A_x)) \right| \cos^{-2}(A_y) \, + \, \left| 1 - \tan (A_y) \right| \cos^{-2}(A_x)}{[1 - \tan (A_x) \, \tan (A_y)]^2}$$

These diverge if $A_x$ and $A_y$ both become $\pi/4$, as the scan lines are then essentially parallel. Consequently, it is necessary to restrict the stylus from this region. In general, a square or rectangular surface is desirable. Assuming the operating area to be a square of side A inside a larger square of side S/2, with one corner located at the scanner as shown in Figure 3A. This leaves an unusable border of width W=(S/2)-A. The largest errors occur at the corner nearest where $A_x$ and $A_y$ become $\pi/4$. At this corner, we have:

$$\text{Equation 23} \quad \tan(A_x) = \tan(A_y) = \frac{1-2\dfrac{W}{S}}{1+2\dfrac{W}{S}}$$

which when substituted into equations 21 and 22 and expanding in the small parameter 2W/S while keeping the leading terms, the errors will then be expressed in equation 24.

$$\text{Equation 24} \quad \delta X = \delta Y = \left(\frac{S}{2}\right)\left(\frac{S}{2W}\right)\delta A$$

The position errors will be about 100 $\delta A$ inches per $\delta A$ radians.

The measurement technique described in connection with Figure 14 provides digital measurements of each angle to one part in 2048 or 11 bits. Since the range of $A_x$ and $A_y$ is about 0.4 radians, the quantization error introduces an angular uncertainty of 0.4/2048 radians or about 0.2 milliradians, mr. Thus, random errors of about 0.01 inches are to be expected.

There is a second type of error due to motion of the origin of the light produced by use of a polygonal scanning mirror. The considerations involved in this error may be appreciated by assuming a polygonal mirror whose sides are located a distance R from the rotation axis. The deflected beam appears to originate at the point of contact of the incident beam with the facet. This point moves slightly along the direction of the incident beam as the polygon rotates. The displacement $\delta R$ along the beam is easily calculated in terms of the rotation angle $A_s$. For convenience, let this angle be zero when the facet is perpendicular to the incident beam. We then find:

$$\text{Equation 25} \quad \delta R = R(1 - \cos(A_s))$$

This motion can be resolved into motions along the X and Y axis through the following equations 26 and 27.

$$\text{Equation 26} \quad \delta X = R(1 - \cos(A_s))\cos(\pi/4)$$

$$\text{Equation 27} \quad \delta Y = R(1 - \cos(A_s))\sin(\pi/4)$$

Thus, for the specific example under discussion, the distance R is about 0.25 inches. The maximum value of $A_s$ during a scan is then somewhat less than 20 degrees, hence the variation in X and Y will be about 0.005 inches.

In accordance with the invention, having established the accurate co-ordinates of the position of the stylus, it is also necessary for accurate data entry to establish the point at which the co-ordinate values are to be selected.

In general, manual operation may be erratic, bouncy or subject to anticipatory motion. As the precision of the positioning increases, it becomes necessary to compensate for errors introduced because of these reasons.

The solution in accordance with the invention is to use the data history to specify a particular set of co-ordinates at some time before the specific decision on entering occurs. This is done by maintaining a file of co-ordinates with the oldest being dropped as a new one is added and selecting co-ordinates from the file at an earlier time to allow for anticipatory motion.

The removal of the stylus from the operating area surface is an excellent data entry type signal, however, there are several practical difficulties to be overcome. First, the last few measured points are likely to be in error, the amount depending on the details of the stylus design and the skill of the user. Second, the stylus may skip across the surface when moved rapidly, producing false removal signals. Finally, anticipatory muscular motions may disturb the stylus position at the critical moment.

The procedure of the invention is based on the concept that the user will have had the stylus at the correct place slightly prior to the decision to remove it. The system maintains a short 'history' file of co-ordinate values, detects lift-off with a 'debouncing' accommodation and then uses the data in the history file to place the final point.

In the manual-data processing interface of the invention, this is accomplished with the apparatus of Figures 1 to 14 which indicates the presence of a finger or other stylus, as well as the co-ordinate values, say X and Y, and a subroutine is provided which stores the X—Y data in a memory element called a circular stack of ring-buffer so that a previous set of co-ordinates can be selected. With a circular stack, or ring-buffer type of memory element, co-ordinate data is added sequentially until the stack is full, whereupon new co-ordinate data is added at the beginning, replacing the oldest data. The effect is to maintain a record of the last N readings, where N is the stack length.

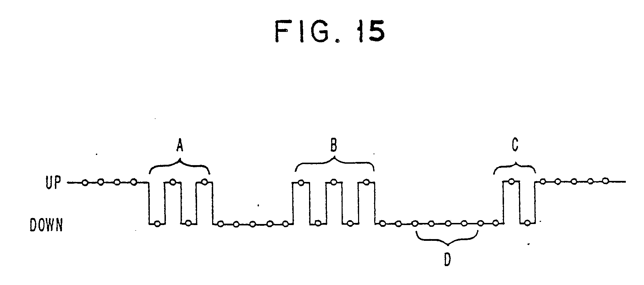

Referring to Figure 15, there is illustrated the nature of the problem to be solved by showing a possible sequence of up/down indications as could occur as a manually moved stylus is lifted by an operator from an operating area surface to indicate a specific point. Each dot represents one sampling point. At section A, the stylus has made initial contact, and then bounced twice. At section B, 3 bounces or missed readings occur as the stylus is moved, and then contact resumes. At section C, one more bounce occurs as the stylus is removed. It will be apparent that co-ordinates selected just before or just after the tyhpical types of bounces will probably be in error. Therefore, a useful procedure should select for final processing only those co-ordinates measured where there is a clear contact indication such as at section D.

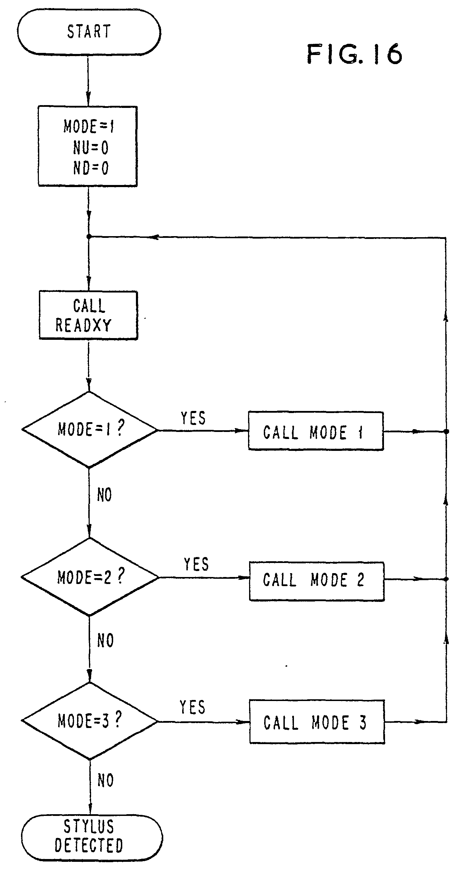

Figure 16 shows a simplified flowchart of the data entry point selection procedure. First the system is initialized by setting a MODE to 1 and counts of stylus up and down to 0. Then the main portion of the algorithm or procedure consists of a loop with co-ordinate data being delivered via the subroutine "READXY". This loop runs until a standard sequence is detected, consisting of an initial steady 'stylus-down' indication, a first loss of contact and a final steady 'stylus-up' indication. In each pass through this loop, one reading is taken and then passed to one of three phase subroutines for processing. The choice of subroutine is determined by the value of a variable called MODE. This variable is modified as appropriate by the subroutines.

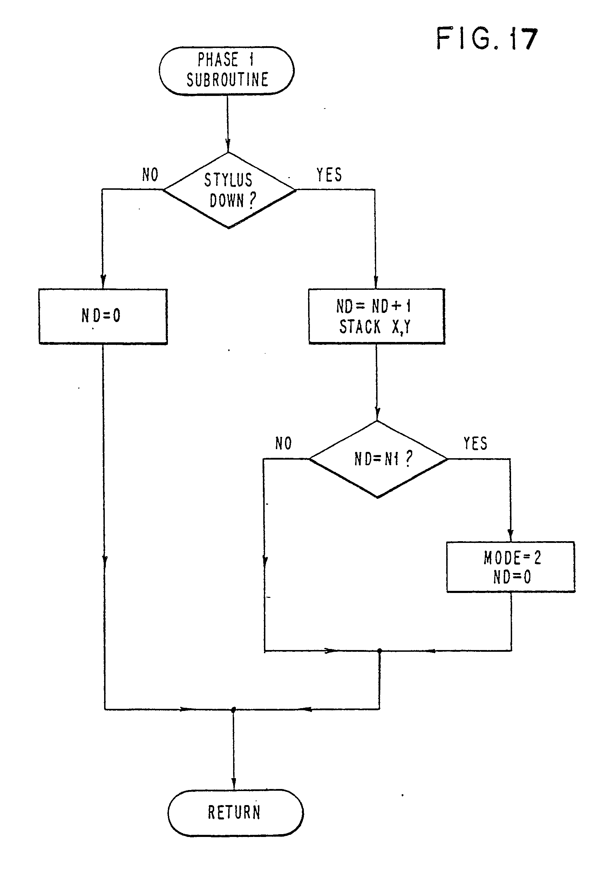

The PHASE1 subroutine illustrated in Figure 17 'looks for' the initial steady presence of a stylus. It does this by counting the number of stylus-down indications (ND), stacking the X—Y co-ordinates and returning to the main loop until a pre-set number, N1, is reached. N1 must be chosen long enough to fill the stack to the desired depth. If a stylus-up indication is obtained first, ND is reset to zero. This ensures that ND cannot reach N1 as the result of a series of bounces. PHASE1 terminates itself when ND reaches N1. It does this by setting MODE equal to 2 before returning to the main loop. At the same time, ND is reset to zero for later use.

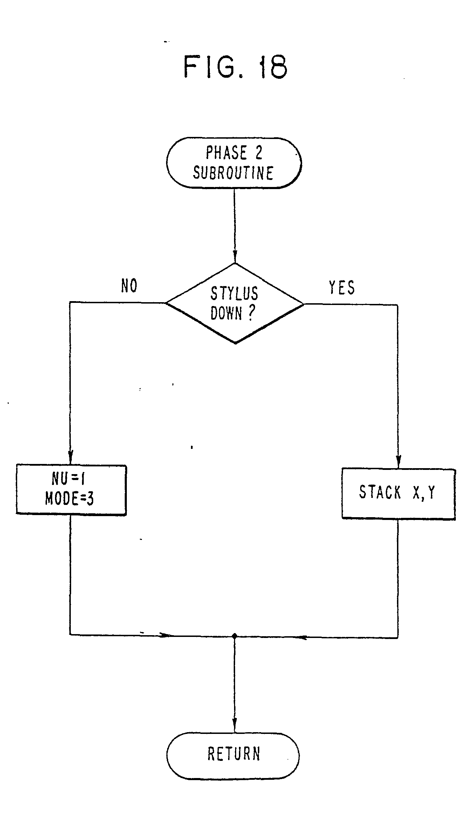

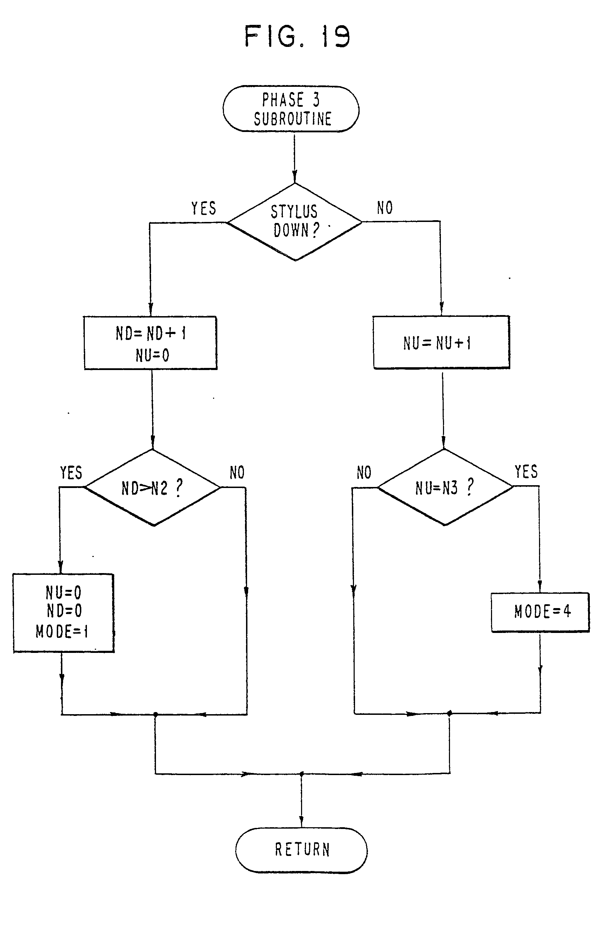

The algorithm must now begin to look for a steady stylus-up indication, while continuing to stack data. The main problem is in dealing with stylus or finger bouncing, which may occur either during positioning or during lift-off. In particular, it is undesirable to stack erroneous data, which might contribute to the final plotted point if the user removes his stylus or finger soon after a few bounces. This situation is avoided by discontinuing stacking after the first stylus-up indication. This cannot be allowed to continue indefinitely, however, as the data in the stack would become out-of-date if the user moved the stylus. A constraint is set on the allowable sequence of events after the first stylus-up indication following PHASE1. In effect, the detection process is lengthened rather than compromise the accuracy of the final measurement. This portion of the algorithm is implemented by the PHASE2 and PHASE3 subroutines illustrated in Figures 18 and 19 respectively. The PHASE2 in Figure 18 subroutine waits for the first stylus-up indication, while continuing to stack data. The subroutine then changes the MODE variable to 3 and sets the stylus-up counter NU to 1. Note that PHASE2 does not change the value of ND, which remains at zero.

The PHASE3 subroutine in Figure 19 then looks for the final steady stylus-up indication by incrementing NU until a value N3 is reached. When this occurs, the subroutine changes the MODE variable to 4 before returning. The main program of Figure 16 will interpret this as a successful detection sequence and the loop will finally terminate. To eliminate the possibility that NU might reach N3 by a series of bounces, NU is reset to zero each time a stylus-down indication occurs.

At the same time, ND is incremented. The entire algorithm is restarted if ND exceeds a value N2, indicating either that the user has changed his mind, or that an accidental bounce occurred. The restart is accomplished by resetting NU and ND to zero, and setting MODE to 1. This prevents the data in the stack from becoming 'stale' or out-of-date. Under the worst conditions, the algorithm will restart N samples after the first stylus-up indication, where N is the product of N2 and N3.

When the detection loop ends, several X—Y values, Na, are removed from the stack and averaged to yield the final co-ordinates. These are taken some distance back in the stack to remove any influence of the lift-off process. The optimum offset, i.e. 'backup' distance from the last recorded point, No, as well as Na and the parameters N1, N2 and N3 depend on the accuracy and reliability of the stylus detection mechanism, and to some extent on the method with which a user operates the device. From a time standpoint, 0.3 seconds is a good time to accommodate the anticipatory reaction time of most users.

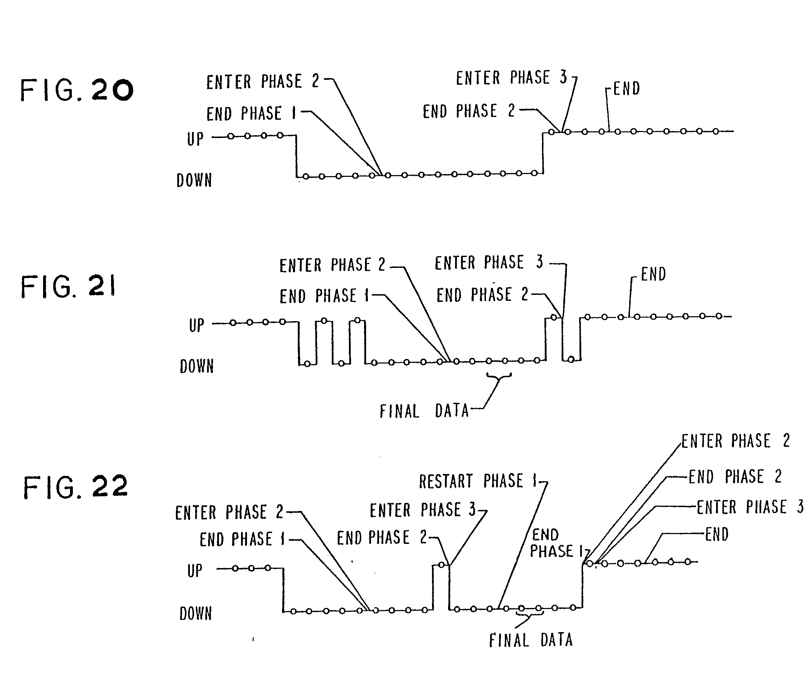

To further illustrate the algorithm, there are shown in Figures 20, 21 and 22 several possible sequence of stylus signals. The small circles indicate sampling times. The arrows indicate the beginning of a new phase, the return to an old one and the occurrence time of the final co-ordinates. There is an assumption that N1=5, N2=3 and N3=3 and that there is a backup of two sampling points. Two points are selected for averaging, as shown.

It will be appreciated that during phase 1, co-ordinates are added to the stack at each sampling time whilst the stylus is down and that N1 sampling times occur before phase 2 is entered. During phase 2, co-ordinates are added to the stack at each sampling time whilst the stylus is down, but there are no minimum or maximum numbers of sampling times to occur before phase 3 is entered. It is only necessary for the stylus to be up at one sampling time to enter phase 3. During phase 3, no co-ordinates are added to the stack and provided that at N3 consecutive sampling times the stylus is up, the operation is complete. Only if the stylus is down more than N2 times during phase 3 is phase 1 re-entered.

Figure 20 illustrates an ideal sequence in which 5(N1) sets of co-ordinates are added to the stack at five consecutive sampling times with the stylus down during phase 1. A further 10 sets of co-ordinates are added to the stack at ten consecutive sampling times with the stylus down during phase 2. Phase 2 is ended by lifting the stylus and after three sampling times during phase 3, the operation is ended. The two sets of co-ordinates added to the stack at the last two (No) sampling times with the stylus down during phase 2 are disregarded and the two sets added at the previous two (Na) sampling times are averaged.

Figure 21 illustrates a sequence with bounces only during initial placement and final lift-off of the stylus. Two individual sets of co-ordinates are added to the stack at separate sampling points with the stylus down between sampling points with the stylus up during phase 1. Then five sets of co-ordinates are added to the stack at five consecutive sampling points with the stylus down during phase 1 and phase 2 is entered. Six sets of co-ordinates are added to the stack at six consecutive sampling points with the stylus down during phase 2. At the next following sample time the stylus is up and phase 3 is entered. At the first sampling time during phase 3 the stylus is down, but no co-ordinates are added to the stack and three consecutive sampling times follow with the stylus up to bring the operation to an end. The two sets of co-ordinates added to the stack at the last two sampling times with the stylus down during phase 2 are disregarded and the two sets added at the previous two sampling times are averaged.

Figure 22 illustrates a sequence interrupted by a bounce, leading to a restart. Five sets of co-ordinates are added to the stack at five consecutive sampling times with the stylus down during phase 1. Four sets of co-ordinates are added to the stack at four consecutive sampling times with the stylus down during phase 2. Phase 2 is interrupted by an unintentional lifting of the stylus and at the first three sampling times during phase 3 the stylus is down. Phase 1 is re-entered and five sets of co-ordinates are added to the stack at five consecutive sampling times with the stylus down. Phase 2 is entered and at the first sampling time the stylus is up. Phase 3 is entered and after three consecutive sampling times with the stylus up, the operation ends. The two sets of co-ordinates added to the stack at the last two sampling times with the stylus down are disregarded and the two sets added at the previous two sampling times are averaged. These all occur during the repeated phase 1.

The parameters N1, N2 and N3, the offset distance, No, and the number of points to be averaged, Na, have to be determined experimentally to provide good performance. There is one constraint which must be obeyed; the stack must hold at least No+Na data co-ordinate values before stacking is discontinued, in order to have enough data to perform the final average. However, if only this number is stored, then the first data point following the initial stylus-down indication might be included in the final average. This point is likely to be in error, as discussed previously. The possibility can be avoided by choosing N1>No+Na. It should be noted that the data point measured just before the stylus-up indication is automatically rejected, as long as No is greater than zero.

Apart from the above constraint, the parameters should be chosen as small as possible in order to achieve a rapid response time. If the device generates a frequent false up and/or down indications, the parameters N1, N2 and N3 will have to be increased to provide reliable operation. Similarly, an increase in Na can improve the accuracy of a device producing large but random errors. Finally, an increase in No may be necessary for applications of the invention in which detection of the stylus is above the surface. This can occur where the finger is the stylus and the user tends to withdraw his finger slowly.

The algorithm of Figures 16 to 19 may be executed on an IBM Series 1 computer equipped with a storage display. A listing of the instructions for a program capable of achieving the goals of the flowcharts follows.

```
***THIS PROGRAM RUNS UNDER FDX ON AN IBM SERIES/COMPUTER          ***
***THE LANGUAGE IS A MIXTURE OF EDS (HIGH-LEVEL) AND ASSEMBLER    ***
***THE EXTERNAL SUBROUTINE 'READXY' OPERATES THE TABLET AND       ***
***RETURNS X AND Y CO-ORDINATE VALUES AND A RETURN CODE (RCODE)   ***
***THE CODE VALUES ARE -1 FOR FINGER-UP, O FOR FINGER DOWN AND    ***
***+1 FOR A SOFT-KEY. THIS IS USED TO ESCAPE FROM INPUT           ***
***WHEN THIS SUBROUTINE ENDS, RCODE IS REDEFINED AS FOLLOWS:      ***
***+1 MEANS SOFTKEY STORED IN VARIABLE 'KEY', O MEANS SUCCESS     ***
***NOTES: NB (BOUNCE COUNTER) IS BUMPED TWICE DURING A BOUNCE     ***
***X,Y CO-ORDINATES IN INCHES.  THE EXTERNAL SUBROUTINE 'BEEP'    ***
***GENERATES AUDIO TONES WHEN CALLED.  THE SUBROUTINE 'PLOTTER'   ***
***PLOTS POINTS ON THE DISPLAY, WHOLE 'ROOT' TAKES SQUARE ROOTS   ***
*************************************************************************

FINGER1    PROGRAM    MAIN=NO
           SUBROUT    FINGER1
           ENTRY      FINGER1
           EXTRN      READXY,PLOTTER,BEEP,ROOT
           EXTRN      X,Y,RCODES,STOPPER,HOLDER,HITONE,LOTONE
```

52

```
************************************************************

***PHASE 1 DETECTS INITIAL FINGER-DOWN STEP, THEN EXITS TO      ***

***PHASE2  THIS REQUIRES N1 SEQUENTIAL FINGER-DOWN INDICATIONS   ***

************************************************************

START     MOVE NU,0,(2,WORD)

          MOVE MODE,1

READ1     DO UNTIL,(MODE,EQ,4)

          CALL READXY

          IF    (RCODE,EQ,1),OR,(STOPPER,EQ,1),OR,(HOLDER,EQ,1),THEN

          RETURN

          ENDIF

          IF    (RCODE,EQ,O),THEN

          MOVE PEN,DOWN

          ELSE

          MOVE PE,UP

          ENDIF

          IF    (MODE,EQ,1),THEN

          CALL MODE1

          ELSE

          IF    (MODE,EQ,2),THEN

          CALL MODE2

          ELSE

          CALL MODE3

          ENDIF

          ENDDO

GOTIT     EQU *

          CALL RMSTEST

          IF    (RMS,LT,TOL,FLOAT),THEN

          CALL BEEP,HITONE

          MOVE RCODE,O

          RETURN

          ELSE

          CALL BEEP,LOTONE

          MOVE MODE,1

          GOTO START

          ENDIF
```

```
****************************************************************
***MODE 1: STACK DATA TILL STEADY PEN-DOWN SIGNAL, THEN SET MODE2*****
****************************************************************
        SUBROUT    MODEL
        IF         (PEN,EQ,UP),THEN
        MOVE       ND,O
        RETURN
        ENDIF
        ADD        ND,1
        IF         (ND,GT,1),THEN
        CALL       PUSH
        ENDIF
        IF         (ND,GT,N1),THEN
        MOVE       ND,O
        MOVE       MODE,2
        CALL       BEEP,HITONE
        ENDIF
        RETURN
```

```
************************************************************************
***MODE 2: STACK DATA TILL FIRST FINGER-UP SIGNAL, THEN SET MODE3*****
************************************************************************

        SUBROUT   MODE 2
        IF        (PEN,EQ,UP),THEN
        MOVE      NU,1
        MOVE      MODE,3
        ELSE
        CALL      PUSH
        ENDIF
        RETURN

************************************************************************
***LOOK FOR STEADY PEN-UP SIGNAL (NU=N3) SET MODE 1 IF PEN GOES  *****
***DOWN AGAIN (ND=N2)                                            *****
************************************************************************

        SUBROUT   MODE 3
        IF        (PEN,EQ,UP),THEN
        ADD       NU,1
        IF        (NU,GE,N3),THEN
        MOVE      MODE,4
        ENDIF
        ELSE
        ADD       ND,1
        MOVE      NU,O
        IF        (ND,GE,2),THEN
        MOVE      NU,O,(2,WORD)
        MOVE      MODE,1
        ENDIF
        ENDIF
        RETURN
```

The set of instructions is called FINGER1 and includes some subroutine activity such as READXY described above. The instructions also include several refinements not specifically addressed in the flowcharts. First, the computer controls a two-tone audio beeper. This provides the user with feedback at the critical steps of the detection process. A high-pitched beep is emitted when leaving PHASE1, and also when the final point is plotted, while a low-pitched beep is emitted if PHASE1 has to be restarted.

A second refinement involves another soft key region of the operating area surface, not illustrated, designated as a 'sink'. Touching this area allows the user to cancel an input step entirely by moving the stylus there before lift-off. This is preferable to entering an unwanted point and then undoing the effects later via a second step.

A third refinement includes, in addition to averaging several points to obtain the final co-ordinates, capability to calculate the rms scatter and no action is to be taken if it is excessive, e.g. more than 3 times the normal value. This effectively rejects points taken with the stylus in motion, and discards obviously noisy measurements. A low-pitched beep is emitted for feedback if a measurement is discarded.

Although the technique of Figures 16 to 19 is described as employed in accordance with the interface of the invention, the concept can also be usefully applied in totally different circumstances. As one example, the combination of a guidance control with a triggering mechanism.

In this example a weapon, such as a rifle equipped with an angular-rate or angular-acceleration transducer, is trained by a torquing mechanism. In accordance with the invention, a short sequence of 2-dimensional angular acceleration measurements would be stored until the trigger was pulled, whereupon any disturbance caused by the trigger pull would be removed by the torquing mechanism before the gun was fired electrically.

As another example, the positioning of manufacturing apparatus such as wire-bonding machine, in which it is necessary to first position a semiconductor chip by human vision and control under a bonding tool, and then to actuate the actual bonding. This, and similar operations can be improved by maintaining a file of co-ordinates of the chip or guidance control, and repositioning under computer control after the final manual signal but prior to performing the actual step. In this way, the actuation would not disturb the final alignment. This could be carried further by first storing all the corrected bonding co-ordinates as entered by the operator, and then performing all the bonds as a second step.

It will be appreciated that the presence or absence of a stylus has to be detected from two source, virtual or actual, and that, as so far described, the detections are by a single light source and photodetector, so that the area has to be swept twice. However, the two sweeps could be performed simultaneously, for example as described below.

As the size of the reference surface increases, it has been found to be increasingly difficult and expensive to provide a sufficiently rigid mounting frame, and adjustment to ensure beam parallelism above and below the reference surface over the entire area requires considerable care.

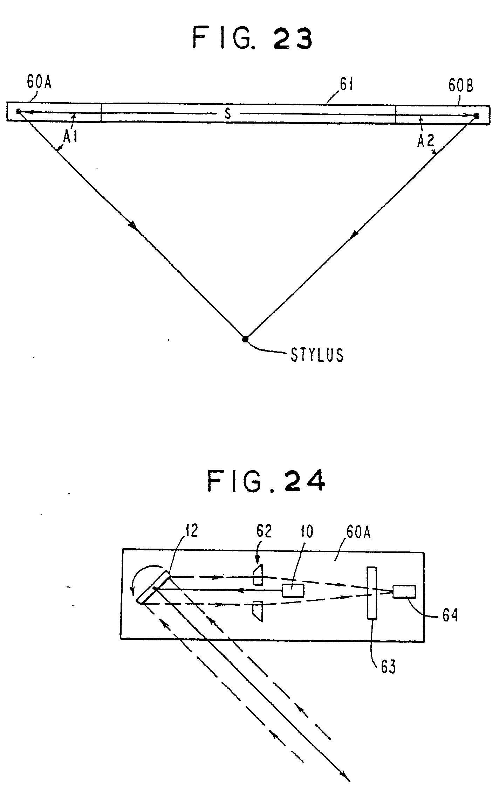

A preferred optical system according to the invention is illustrated in Figures 23 and 24, in which dihedral mirrors are eliminated by adding a second scanner.

Two scanners mounted at opposite corners of one edge of an operating surface area and the remaining three sides are lined with retroreflective tape. The tape does not need to be well aligned with respect to the scanners, although the scanning plane must be aligned with respect to the desired operating area surface. Although two scanning mirrors are required, a single laser and/or photodetector channel can be used if the rotating mirrors are properly phased. This structure avoids a requirement for a reference surface, to prevent the stylus from interrupting any beams passing beneath the plane of detection as the beams are now confined to a single plane. This configuration is particularly well suited for use in front of a projection type large display.

Two similar scanning devices 60A and 60B are mounted a definite distance apart at opposite ends of a support 61, such as a bar. The scanner 60A (Figure 24) includes a source 10 providing a beam which is swept by scanner 12. The operating area is surrounded by retroreflective strips similar to 13 and 15 but covering the remaining three sides. The strips may be bowed to improve the angle of incidence of the light. The reflected light returns along the beam as shown by the dotted lines to the scanner 12 and is reflected through a split converging lens 62 and converging lens 63 to a sensor 64. When either beam strikes a stylus, the beam is interrupted and the sensor 64 detects the absence of reflected light.

A start pulse is easily obtained from the detector, as the mirror will reflect the laser light directly into the detector lens before scanning the surface. The stylus co-ordinates, when the sensors detect interruption, can then be obtained by a simple trigonometric calculation using the angle from each scanner and the known scanner separation distance S. Thus, if the angles measured by the scanners are A1 and A2, then the X and Y co-ordinates of the stylus are set forth in equations 28 and 29.

$$\text{Equation 28} \qquad X = (S/2)((TAN(A1)-TAN(A2))/TAN(A1)+TAN(A2))$$

$$\text{Equation 29} \qquad Y = (S)(TAN(A1)TAN(A2))/(TAN(A1)+TAN(A2))$$

What has been described is an interface between manual operation and data processing involving the dual capability to optically determine a precise location of a manual indicator and to select which of the

manually traversed exact locations represents the specific data desired. The capabilities of the invention provide both high accuracy and greater flexibility than previously available.

**Claims**

1. An apparatus for determining the co-ordinate location of a manually movable object (27) on a surface area (26, 30), comprising means (12) for scanning light over the surface, at least one light responsive timing indicator (22, 23), retroreflective means (13, 15) employing a material that reflects back toward the source (10) of the scanning light a large fraction of the incident light, the amount being relatively insensitive to the angle of incidence, light sensing means (17; 64) responsive to changes in retroreflected light as the scanning light passes the manually movable object, and means specifying the co-ordinate location of the manually movable object based on the change of reflected light sensed by said sensing means in relation to the time the scanning light strikes the timing indicator, characterized in that

the scanning light is comprised of one single light beam,

the timing indicator (22, 23) is positioned at one end of the scanning travel,

the surface area is surrounded by two pairs of mutually perpendicularly oriented mirrors, one pair comprising two retroreflective mirrors (13, 15) and the other pair comprising two dihedral mirrors (18, 19),

the optical system is arranged such that the movable object will intercept the light beam twice during a scan, and in that

there are means (Figure 14) provided for calculating the co-ordinates of the object from a determination of the time interval between the scan start, and the first and the second intercept of the beam by the object, respectively.

2. Apparatus as claimed in claim 1, wherein the surface area (26, 30) is essentially rectangular and is located adjacent and essentially parallel to the surface of a display.

3. Apparatus as claimed in claim 1 or 2, wherein said means for scanning the light beam comprises a moving mirror (12) located in the light path between the light source (10) and the retroreflective means (13, 15).

4. Apparatus as claimed in claim 3, wherein the moving mirror is located essentially at one corner of the rectangular area.

5. Apparatus as claimed in any preceding claim, wherein said light sensing means (17; 64) comprises a beam splitting mirror (11) for reflecting a part of the reflected light into a photodetector (17; 64).

6. Apparatus as claimed in any preceding claim, wherein the dihedral mirror reflects the scanning light beam from one plane, parallel to and below the surface area, to another plane parallel to and above the surface or vice versa.

7. Apparatus as claimed in any preceding claim, including manual position compensation means which stores an immediately recent series of position locations and means for selecting a position location that is prior in time to the last stored position occupied by said manually movable object (27).

8. Apparatus as claimed in claim 7, wherein said prior time is 0,3 seconds.


**Patentansprüche**

1. Gerät für die Ermittlung der Positionskoordinaten eines von Hand beweglichen Gegenstands (27) auf einer Fläche (26, 30), mit Mitteln (12) für die Abtastung der Fläche mit einem Lichtstrahl, mit mindestens einem auf Licht ansprechenden Zeitanzeiger (22, 23), rückspiegelnden Mitteln (13, 15), die einen Werkstoff verwenden, der einen großen Teil des einfallenden Lichtes zurück zur Quelle (10) des Abtastlichts strahlt, wobei die zurückgestrahlte Menge verhältnismäßig wenig vom Einfallswinkel beeinflußt wird, lichtempfindliche Mittel (17, 64), die auf Änderungen des zurückgestrahlten Lichtes beim Vorübergehen des Abtastlichtes am von Hand beweglichen Gegenstand ansprechen, und Mittel, die die Positionskoordinaten des von Hand beweglichen Gegenstands auf der Grundlage der Änderung des zurückgestrahlten, von den lichtempfindlichen Mitteln aufgenommenen Lichtes in Bezug auf die Zeit, in der das Abtastlicht auf den Zeitanzeiger auftrifft, angeben, dadurch gekennzeichnet, daß

das Abtastlicht aus einem einzelnen Lichtstrahl besteht,

der Zeitanzeiger (22, 23) an einem Ende des Abtastweges positioniert ist,

die Fläche von zwei Paaren zueinander senkrecht angeordneten Spiegeln eingefaßt ist, von denen ein Paar zwei Rückspiegel (13, 15) und das andere Paar zwei zweiflächige Spiegel (18, 19) enthält, das optische System so angeordnet ist, daß der bewegliche Gegenstand den Lichtstrahl zweimal in einer Abtastung aufnimmt, und daß Mittel (Abb. 14) vorgesehen sind, um die Koordinaten des Gegenstands durch die Bestimmung des Zeitintervalls zwischen dem Anfang der Abtastung und der ersten bzw. zweiten Unterbrechung des Strahls durch den Gegenstand zu errechnen.

2. Gerät gemäß Anspruch 1, in dem die Fläche (26, 30) im wesentlichen rechteckig ist und im wesentlichen parallel zu einer Anzeigefläche, an ihr anliegend, angeordnet ist.

3. Gerät gemäß Anspruch 1 oder 2, in dem besagte Mittel zum Abtasten des Lichtstrahls einen beweglichen Spiegel (12) enthalten, der im Lichtweg zwischen der Lichtquelle (10) und den rückspiegelnden Mitteln (13, 15) angeordnet ist.

**EP 0 183 951 B1**

4. Gerät gemäß Anspruch 3, in dem der sich bewegende Spiegel im Wesentlichen an einer Ecke der rechteckigen Fläche angeordnet ist.

5. Gerät gemäß einem beliebigen der vorangehenden Ansprüche, in dem besagte lichtempfindliche Mittel (17, 64) einen Strahlteilspiegel (11) enthalten, um einen Teil des zurückgestrahlten Lichtes in einen Lichtdetektor (17, 64) zu lenken.

6. Gerät gemäß einem beliebigen der vorangehenden Ansprüche, in dem der zweiflächige Spiegel den Abtastlichtstrahl von einer ebenen Fläche, parallel zur Oberfläche und unter ihr liegend, in eine andere Fläche parallel zur Oberfläche und über ihr liegend, oder umgekehrt, lenkt.

7. Gerät gemäß einem der vorangehenden Ansprüche, mit manuellen Positionsausgleichsmitteln, welche eine unmittelbar vorangehende Reihe von Positionsbestimmungen speichern, und Mitteln für die Auswahl einer Position, die zeitlich der letzten gespeicherten Position vorangeht, welche vom besagten von Hand beweglichen Gegenstand (27) eingenommen wurde.

8. Gerät gemäß Anspruch 7, in dem die besagte vorangehende Zeit 0,3 Sekunden beträgt.

**Revendications**

1. Appareil pour déterminer les coordonnées de position d'un objet (27) déplaçable manuellement sur une surface (26, 30), comprenant des moyens (12) pour balayer une lumière sur la surface, au moins un indicateur de synchronisation sensible à la lumière (22, 23), des moyens de rétroréflexion (13, 15) utilisant une matière qui réfléchit en retour vers la source (10) de la lumière de balayage une grande fraction de la lumière incidente, la quantité étant relativement insensible à l'angle d'incidence, des moyens de détection de lumière (17; 64) qui répondent aux variations de la lumière rétroréfléchie lorsque la lumière de balayage rencontre l'objet manuellement déplaçable, et des moyens qui spécifient les coordonnées de position de l'objet manuellement déplaçable, sur la base de la variation de la lumière réfléchie détectée par lesdits moyens de détection par rapport à l'instant où la lumière de balayage frappe l'indicateur de synchronisation, caractérisée en ce que

la lumière de balayage est constituée d'un unique faisceau de lumière,

l'indicateur de synchronisation (22, 23) est placé à une extrémité de la course de balayage,

la surface est entourée par deux paires de miroirs orientés mutuellement perpendiculairement, une paire comprenant deux miroirs rétroréflecteurs (13, 15) et l'autre paire comprenant deux miroirs à dièdre (18, 19),

le système optique est agencé de sorte que l'objet déplaçable intercepte le faisceau de lumière deux fois pendant un balayage, et en ce que

des moyens (figure 14) sont prévus pour calculer les coordonnées de l'objet à partir d'une détermination de l'intervalle de temps entre le début du balayage et la première et la deuxième interceptions du faisceau par l'objet, respectivement.

2. Appareil suivant la revendication 1, dans lequel la surface (26, 30) est sensiblement rectangulaire et est adjacente et sensiblement parallèle à la surface d'un affichage.

3. Appareil suivant la revendication 1 ou 2, dans lequel lesdits moyens de balayage du faisceau de lumière comprennent un miroir mobile (12) placé sur le chemin de la lumière entre la source de lumière (10) et les moyens de rétroréflexion (13, 15).

4. Appareil suivant la revendication 3, dans lequel le miroir mobile est placé sensiblement à un angle de la surface rectangulaire.

5. Appareil suivant l'une quelconque des revendications précédentes, dans lequel lesdits moyens de détection de lumière (17; 64) comprennent un miroir de division de faisceau (11) pour réfléchir une partie de la lumière réfléchie vers un photodétecteur (17, 64).

6. Appareil suivant l'une quelconque des revendications précédentes, dans lequel le miroir à dièdre réfléchit le faisceau de lumière de balayage, d'un premier plan parallèle à la surface et au-dessous de celle-ci à un autre plan parallèle à la surface et au-dessus de celle-ci, ou inversement.

7. Appareil suivant l'une quelconque des revendications précédentes, comprenant des moyens de compensation de position manuelle qui stockent une série immédiatement récente de coordonnées de position, et des moyens pour choisir une position qui est antérieure dans le temps à la dernière position stockée occupée par ledit objet manuellement déplaçable (27).

8. Appareil suivant la revendication 7, dans lequel ledit temps d'antériorité est de 0,3 seconde.

58

# FIG . 1

# FIG. 2

FIG. 3A

VIRTUAL BEAM

LIGHT

EDGE OF SURFACE

TOP SURFACE

FIG.3B

EDGE OF SURFACE

FIG. 3C

FIG. 4

# FIG. 5

FIG. 6

FIG. 7

FIG. 8

# FIG. 9

RELATIVE INTENSITY

ANGLE OF INCIDENCE (deg)

# FIG. 1O

RELATIVE INTENSITY

DIVERGENCE ANGLE (deg.)

**FIG. 11**

**FIG. 12**

SIGNAL INPUT / LOGIC LEVEL OUTPUT / THRESHOLD ADJUST / SAMPLING GATE

**FIG. 13A**

ANALOG SIGNAL / TIME

**FIG. 13B**

ANALOG SIGNAL / TIME

**FIG. 13C**

DIGITAL SIGNAL / TIME

8

FIG. 14

# FIG. 15

FIG.16

FIG. 17

PHASE 1
SUBROUTINE

STYLUS
DOWN ?

NO — ND = 0

YES — ND = ND + 1
STACK X,Y

ND = N1 ?

YES — MODE = 2
ND = 0

RETURN

# FIG. 18

# FIG. 19

PHASE 3
SUBROUTINE

STYLUS
DOWN ?

YES

NO

ND = ND + 1
NU = 0

NU = NU + 1

ND > N2 ?

YES

NO

NU = N3 ?

NO

YES

NU = 0
ND = 0
MODE = 1

MODE = 4

RETURN

ENTER PHASE 3

END

ENTER PHASE 2

END PHASE 1

END PHASE 2

UP

DOWN

**FIG. 20**

END

ENTER PHASE 3

ENTER PHASE 2

END PHASE 2

END PHASE 1

FINAL DATA

UP

DOWN

**FIG. 21**

ENTER PHASE 2

END PHASE 2

ENTER PHASE 3

END

RESTART PHASE 1

END PHASE 1

ENTER PHASE 3

ENTER PHASE 2

END PHASE 2

END PHASE 1

FINAL DATA

UP

DOWN

**FIG. 22**

15

# FIG. 23

# FIG. 24